# EUROPEAN PATENT APPLICATION

(11) **EP 4 485 905 A1**
(43) Date of publication of application: **01.01.2025**
(21) Application number: 23777938.4
(22) Date of filing: 22.03.2023
(51) Int. Cl.: H04L 67/60

(54) **METHOD AND APPARATUS FOR DISCOVERING APPLICATION SERVER**

(30) Priority: 30.03.2022 CN 202210326136
(71) Applicant: Huawei Technologies Co., Ltd., Shenzhen, Guangdong 518129 (CN)
(72) Inventor: HU, Yajie, Shenzhen, Guangdong 518129 (CN); CHEN, Zehao, Shenzhen, Guangdong 518129 (CN); YANG, Yanmei, Shenzhen, Guangdong 518129 (CN)
(74) Representative: Pfenning, Meinig & Partner mbB
(86) International application number: PCT/CN2023/082997
(87) International publication number: WO 2023/185567

(57) **Abstract**

This application provides an application server discovery method and apparatus. The method includes: A configuration server receives a first request message, where the first request message is used to request to discover an enabler server, and the enabler server is configured to serve a plurality of terminal devices; the configuration server determines a target enabler server based on information about a terminal device group, where the terminal device group includes the plurality of terminal devices; and the configuration server sends a first response message, where the first response message includes information about the target enabler server. An application server is discovered with reference to the information about the terminal device group. The application server discovery method and apparatus provided in this application help select a same application server for a plurality of terminal devices, and help the plurality of terminal devices obtain same application service experience when obtaining a same application service.

## Description

This application claims priority to Chinese Patent Application No. 202210326136.6, filed with the China National Intellectual Property Administration on March 30, 2022 and entitled "APPLICATION SERVER DISCOVERY METHOD AND APPARATUS", which is incorporated herein by reference in its entirety.

### TECHNICAL FIELD

This application relates to the communication field, and more specifically, to an application server discovery method and apparatus.

### BACKGROUND

In the standalone (standalone, SA) 6 standard, different edge application servers (edge application servers, EASs) can provide a same application service for different application clients. In some scenarios, when obtaining a same application service, application clients running on different terminal devices may have requirements for similar or same application service levels (for example, same delay requirements), so that the plurality of application clients have consistent application service experience. How to perform an EAS discovery procedure to enable a plurality of terminal devices to obtain similar application service experience when obtaining a same application service is an urgent problem to be resolved.

### SUMMARY

This application provides an application server discovery method and apparatus. The method may be used to determine a same edge application server for a plurality of terminal devices, so that application clients on the plurality of terminal devices can obtain same application service experience.

According to a first aspect, an application server discovery method is provided. The method includes: A configuration server receives a first request message, where the first request message is used to request to discover an enabler server, and the enabler server is configured to serve a plurality of terminal devices; the configuration server determines the enabler server based on information about a terminal device group, where the terminal device group includes the plurality of terminal devices; and the configuration server sends a first response message, where the first response message includes information about the enabler server.

The enabler server included in the first response message herein is one enabler server that serves the plurality of terminal devices. The first response message may further include another enabler server. When the first response message includes a plurality of enabler servers, the terminal device needs to select one enabler server from the plurality of enabler servers to serve the terminal device. In this case, the enabler server selected by the terminal device is the enabler server configured to serve the plurality of terminal devices.

In a possible implementation, that the configuration server determines the enabler server based on information about a terminal device group includes: The configuration server determines, based on the information about the terminal device group, that a first terminal device belongs to the terminal device group; the configuration server determines, based on the information about the terminal device group, the enabler server for the terminal device group; and the configuration server determines that the enabler server serving the terminal device group is an enabler server determined by the first terminal device.

For a 1^{st} terminal device, in the terminal device group, that requests to discover the enabler server, when the first request message sent by the terminal device includes the information about the terminal device group and the configuration server does not locally store the information about the terminal device group, the configuration server stores the information about the terminal device group.

In the application server discovery method provided in this technical solution, the configuration server determines, by using the information about the terminal device group including the plurality of terminal devices, the enabler server that serves the terminal device group. In comparison with a method for determining one enabler server by considering only information about one terminal device, the application server discovery method provided in this technical solution helps a configuration server determine a same enabler server for a plurality of terminal devices. Because a quantity of application servers registered with a same enabler server is determined, discovering the application servers by the same enabler server can improve a probability of determining a same application server for the plurality of terminal devices. In other words, the application server discovery method provided in this application also helps determine the same application server for the plurality of terminal devices.

In a possible implementation, the group information is sent to the configuration server by using the first request message.

In another possible implementation, the group information is obtained by the configuration server through a core network element or in another manner.

With reference to the first aspect, in some implementations of the first aspect, the information about the terminal device group includes a terminal device list and/or a group identifier, the terminal device list includes device identifiers of the plurality of terminal devices, and the group identifier identifies the terminal device group; and
when the information about the terminal device group includes the terminal device list, the configuration server may first determine, based on the terminal device list and a device identifier of the first terminal device, whether the first terminal device is included in the terminal device list. If determining that the first terminal device is included in the terminal device list, the configuration server may obtain a requirement that the first terminal device needs to select an enabler server that is the same as that of another terminal device in the terminal device group, and then perform discovery of the enabler server or another operation of determining the enabler server. If determining that the first terminal device is not included in the terminal device list, the configuration server performs a conventional enabler server discovery procedure for the first terminal device.

It should be noted herein that, for a 1^{st} terminal device, in the terminal device group, that requests to discover the enabler server, the configuration server cannot confirm an identity of the terminal device when the information about the terminal device group is not obtained. The configuration server may perform the conventional enabler server discovery procedure to discover one or more enabler servers. In this case, the enabler server determined by the configuration server is the one or more enabler servers, and the first response message includes the one or more enabler servers, so that the first terminal device may select one enabler server from the one or more enabler servers to serve the first terminal device, and send information about the enabler server to the configuration server. The configuration server receives and stores the information about the enabler server selected by the 1^{st} terminal device, so that when subsequently obtaining the information about the terminal device group, the configuration server sends the stored information about the enabler server to another terminal device that belongs to the same terminal device group as the 1^{st} terminal device.

According to the application server discovery method provided in this technical solution, before an enabler server discovery procedure is performed for the first terminal device, an identity of the first terminal device is first confirmed. This helps improve efficiency of determining the same enabler server by the configuration server for the plurality of terminals, and further helps improve efficiency of determining the same application server for the plurality of terminal devices.

When the information about the terminal device group includes the group identifier of the terminal device group, after receiving the first request message, if the configuration server obtains the group identifier that is of the terminal device group and that is included in the first request message, the configuration server may directly use the group identifier to determine whether the first terminal device belongs to the terminal device group, to determine whether the first terminal device has the requirement of selecting the enabler server that is the same as that of the another terminal device in the terminal device group.

Because an amount of data included in the group identifier is small, including the group identifier in the first request message does not cause an excessively large amount of data in the first request message to some extent. This helps ensure transmission efficiency of the first request message. When the configuration server determines the first terminal device based on the group identifier, efficiency of processing the first request message by the configuration server is also improved, so that the efficiency of determining the same enabler server by the configuration server for the plurality of terminal devices is further improved and similarly, the efficiency of determining the same application server for the plurality of terminal devices is further improved.

With reference to the first aspect, in some implementations of the first aspect, the information about the terminal device group further includes location information and/or a service identifier, where the location information is location information of the plurality of terminal devices, and the service identifier identifies a service that needs to be obtained by the plurality of terminal devices.

When the information about the terminal device group includes the location information of the plurality of terminal devices, when determining a same enabler server for the plurality of terminal devices, the configuration server may determine the enabler server with reference to geographical locations of the different terminal devices. If distances between the enabler server and the plurality of terminal devices served by the enabler server are close, it may be considered that delays in serving the plurality of terminal devices by the enabler server are close. In comparison with a case in which the geographical locations of the plurality of terminal devices are not considered, this helps determine an enabler server whose communication delays with the different terminal devices are close.

Therefore, the application server discovery method provided in this technical solution helps the configuration server determine a more appropriate enabler server for the plurality of terminal devices. Because the application server registered with the enabler server is determined, the application server discovery method provided in this application also helps determine a more appropriate application server for the plurality of terminal devices.

When the information about the terminal device group includes information about the service that needs to be obtained by the plurality of terminal devices, the configuration server may determine the service that needs to be obtained by the terminal device while confirming the identity of the first terminal device. Different application servers may provide different types of application services. Therefore, a same enabler server is determined with reference to the service that needs to be obtained by the terminal device. This helps the configuration server determine a more appropriate enabler server for the plurality of terminal devices, and further helps determine a more appropriate application server for the plurality of terminal devices.

In a possible implementation, the first request message includes the information about the terminal device group.

In a possible implementation, the first response message includes information about the plurality of enabler servers, where the plurality of enabler servers include the enabler server; and the configuration server receives the information about the enabler server.

With reference to the first aspect, in some implementations of the first aspect, the first request message includes first discovery information and/or second discovery information, the first discovery information indicates to discover the enabler server for the plurality of terminal devices, and the second discovery information is used to describe a service range expected by the plurality of terminal devices; and the configuration server determines the enabler server based on the first discovery information and/or the second discovery information.

The first discovery information may be an explicit indication, to be specific, directly indicate that the enabler server that needs to be discovered is configured to serve the plurality of terminal devices. The first discovery information may alternatively be an implicit indication. For example, the first discovery information is the terminal device list. Therefore, after receiving the first request message, the configuration server may also identify that the enabler server that is requested to be discovered is configured to serve the plurality of terminal devices.

When the first request message includes information about a quantity of terminal devices included in the terminal device group, the configuration server may alternatively determine the enabler server in the following manners:

If the configuration server may receive, within a preset time range, first request messages sent by all the terminal devices in the terminal device group, the configuration server may determine the enabler server based on information about all the terminal devices in the group (for example, the location information of the terminal devices).

If the configuration server does not receive, within the preset time range, the first request messages sent by all the terminal devices in the terminal device group, the configuration server may determine an enabler server based on information about a terminal device that has sent the first request message, and associate information about the enabler server with the terminal device list and/or the group identifier. When a terminal device in the same terminal device list or having the same group identifier subsequently requests to discover the enabler server, the configuration server may send the stored information about the enabler server to the subsequent terminal device.

In this technical solution, the first request message sent by the terminal device to the configuration server includes indication information. After obtaining the indication information, the configuration server may determine, based on the first discovery information, that the same enabler server needs to be determined for the plurality of terminal devices, and may determine, based on the second discovery information, the enabler server required by the service range of the plurality of terminal devices. Implementation of this technical solution helps improve the efficiency of determining, by the configuration server, the same enabler server for the plurality of terminal devices, helps the configuration server determine a more appropriate enabler server for the plurality of terminal devices, and helps improve service experience of the plurality of terminal devices.

With reference to the first aspect, in some implementations of the first aspect, the first response message further includes first reporting indication information, and the first reporting indication information indicates to send the information about the enabler server to the configuration server.

When the first response message includes the plurality of enabler servers, the first terminal device needs to select one enabler server from the plurality of enabler servers to serve the first terminal device. The first response message includes indication information that indicates to report the enabler server selected by the terminal device, so that the configuration server obtains the enabler server determined for the terminal device group. When another terminal device in the terminal device group requests the configuration server to determine the enabler server, the configuration server may directly send, to the another terminal device, the information about the enabler server reported by the first terminal device.

In comparison with a manner in which the information about the enabler server selected by the first terminal device is obtained in another manner, the first terminal device selects the enabler server and then directly sends the information about the enabler server to the configuration server. This helps improve accuracy of obtaining the information about the enabler server by the configuration server, and further helps improve efficiency of determining the same enabler server by the configuration server for the plurality of terminal devices. Therefore, the efficiency of determining the same application server for the plurality of terminal devices is further improved.

With reference to the first aspect, in some implementations of the first aspect, the first response message further includes second reporting indication information, the second reporting indication information indicates to send information about the application server to the enabler server, and the application server is configured to provide an application service for the plurality of terminal devices.

When the first response message includes an indication for reporting the information about the application server selected by the terminal device to the enabler server, after selecting the application server from the plurality of application servers, the terminal device sends the information about the application server to the enabler server. After obtaining the information about the application server, the enabler server may directly send the information about the application server to another terminal device in the terminal device group, without a need of sending a request message to the terminal device to obtain the application server.

Because the second reporting indication information is included in the second response message by the configuration server, and indicates a procedure of selecting the application server by the terminal device, implementation of this technical solution helps reduce consumption of communication signaling between the enabler server and the terminal device.

It should be noted that the first reporting indication information and the second reporting indication information may be two different information elements, or may be a same information element.

For example, a value of an information element "reporting indication" may be 00, 01, 10, or 11. When the value is 00, it indicates that the reporting indication information is empty, that is, no reporting indication is included; when the value is 01, it indicates that the selected enabler server needs to be sent to the configuration server (that is, the meaning of the first reporting indication information); when the value is 10, it indicates that the selected application server needs to be sent to the enabler server (that is, the meaning of the second reporting indication information); and when the value is 11, it indicates that the selected enabler server needs to be sent to the configuration server and the selected application server needs to be sent to the enabler server (including both the meanings of the first reporting indication and the second reporting indication).

In a possible implementation, the first response message further includes third reporting indication information, where the third reporting indication information indicates to send the information about the enabler server to the configuration server, and the third reporting indication information further indicates to send the information about the application server to the enabler server.

With reference to the first aspect, in some implementations of the first aspect, the configuration server sends selection indication information to the enabler server, where the selection indication information indicates the enabler server to select a same application server for the plurality of terminal devices.

In this technical solution, the configuration server directly indicates the enabler server to select the same application server for the plurality of terminal devices in the terminal device group. After receiving the selection indication information, the enabler server may use content included in the indication information as a basis for determining, for the terminal device in the terminal device group, a check performed by the application server. In comparison with a manner in which the enabler server receives the check basis from the terminal device, this helps reduce signaling consumption for communication between the enabler server and the terminal device, and helps improve the efficiency of determining the same application server by the enabler server for the plurality of terminal devices.

According to a second aspect, an application server discovery method is provided. The method includes: An enabler server receives a second request message, where the second request message is used to request to discover an application server, and the application server is configured to provide an application service for a plurality of terminal devices; the enabler server determines the application server based on information about a terminal device group, where the terminal device group includes the plurality of terminal devices; and the enabler server sends a second response message, where the second response message includes information about the application server.

The application server included in the second response message herein is one application server that provides the application service for the plurality of terminal devices. The second response message may further include another application server. When the second response message includes a plurality of application servers, the terminal device needs to select one application server from the plurality of application servers to provide the application service for the terminal device. In this case, the application server selected by the terminal device is an application server configured to provide the application service for the plurality of terminal devices.

In a possible implementation, that the enabler server determines the application server based on information about a terminal device group includes: The enabler server determines, based on the information about the terminal device group, that a first terminal device belongs to the terminal device group; the enabler server determines, based on the information about the terminal device group, the application server that provides the application service for the terminal device group; and the enabler server determines that the application server that provides the application service for the terminal device group is an application server that provides the application service for the first terminal device.

For a 1^{st} terminal device, in the terminal device group, that requests to discover the application server, when the second request message sent by the terminal device includes the information about the terminal device group and the enabler server does not locally store the information about the terminal device group, the enabler server stores the information about the terminal device group.

In the application server discovery method provided in this technical solution, the enabler server determines, by using the information about the terminal device group including the plurality of terminal devices, the application server that provides the application service for the terminal device group. In comparison with a method for determining one application server by considering only information about one terminal device, this technical solution helps the enabler server determine the same application server for the plurality of terminal devices.

With reference to the second aspect, in some implementations of the second aspect, the information about terminal device group includes a terminal device list and/or a group identifier, the terminal device list includes device identifiers of the plurality of terminal devices, and the group identifier identifies the terminal device group.

When the information about the terminal device group includes the terminal device list, the enabler server may first determine, based on the terminal device list and a device identifier of the first terminal device, whether the first terminal device is included in the terminal device list. If determining that the first terminal device is included in the terminal device list, the enabler server may obtain a requirement that the first terminal device needs to select an application server that is the same as that of another terminal device in the terminal device group, and then perform discovery of the application server or another operation of determining the application server. If determining that the first terminal device is not included in the terminal device list, the enabler server performs a conventional application server discovery operation.

It should be noted herein that, for a 1^{st} terminal device, in the terminal device group, that requests to discover the application server, the enabler server cannot confirm an identity of the terminal device when the information about the terminal device group is not obtained. The enabler server may perform a conventional application server discovery procedure to discover one or more application servers. In this case, the application server determined by the enabler server is the one or more application servers, and the second response message includes the one or more application servers, so that the first terminal device may select one application server from the one or more application servers to provide the application service for the first terminal device, and send information about the application server to the enabler server. The enabler server receives and stores the information about the application server selected by the 1^{st} terminal device, so that when subsequently obtaining the information about the terminal device group, the enabler server sends the stored information about the application server to another terminal device that belongs to the same terminal device group as the 1^{st} terminal device.

According to the application server discovery method provided in this technical solution, before an application server discovery procedure is performed for the first terminal device, an identity of the first terminal device is first confirmed. This helps improve efficiency of determining the same application server by the enabler server for the plurality of terminal devices.

When the information about the terminal device group includes the group identifier of the terminal device group, after the enabler server receives the second request message, if the enabler server obtains the group identifier, of the terminal device group, included in the second request message, the enabler server may directly use the group identifier to determine whether the first terminal device belongs to the terminal device group, to determine whether the first terminal device has the requirement of selecting the application server that is the same as that of the another terminal device in the terminal device group.

Because an amount of data included in the group identifier is small, including the group identifier in the second request message does not cause an excessively large amount of data in the second request message to some extent. This helps ensure transmission efficiency of the second request message. When the enabler server determines the first terminal device based on the group identifier, efficiency of processing the second request message by the enabler server is also improved, so that the efficiency of determining, by the enabler server, the same application server for the plurality of terminal devices is further improved.

With reference to the second aspect, in some implementations of the second aspect, the information about the terminal device group further includes location information and/or a service identifier, where the location information is location information of the plurality of terminal devices, and the service identifier identifies a service that needs to be obtained by the plurality of terminal devices.

When the information about the terminal device group includes the location information of the plurality of terminal devices, when determining a same application server for the plurality of terminal devices, the enabler server may determine the application server with reference to geographical locations of the different terminal devices. In comparison with a case in which the geographical locations of the plurality of terminal devices are not considered, this helps determine an application server whose communication delays with the different terminal devices are close. The application server discovery method provided in this technical solution helps the enabler server determine a more appropriate application server for the plurality of terminal devices.

When the information about the terminal device group includes information about the service that needs to be obtained by the plurality of terminal devices, the enabler server may determine the service that needs to be obtained by the terminal device while confirming the identity of the first terminal device. Different application servers may provide different types of application services. Therefore, a same application server is determined with reference to the service that needs to be obtained by the terminal device. This helps the enabler server determine a more appropriate application server for the plurality of terminal devices.

In a possible implementation, the second request message includes the information about the terminal device group.

In a possible implementation, the second response message includes information about the plurality of application servers, where the plurality of application servers include the application server; and the enabler server receives the information about the application server.

With reference to the second aspect, in some implementations of the second aspect, the second request message includes third discovery information and/or fourth discovery information, the third discovery information indicates to discover the application server for the plurality of terminal devices, and the fourth discovery information is used to describe an application service range expected by the plurality of terminal devices; and the enabler server determines the application server based on the third discovery information and/or the fourth discovery information.

The third discovery information may be an explicit indication, to be specific, directly indicate that the application server that needs to be discovered is configured to serve the plurality of terminal devices. The third discovery information may alternatively be an implicit indication. For example, the third discovery information is the terminal device list. Therefore, after receiving the second request message, the enabler server may also identify that the application server that is requested to be discovered is configured to provide the application service for the plurality of terminal devices.

When the second request message includes information about a quantity of terminal devices included in the terminal device group, the enabler server may alternatively determine the application server in the following manners.

If the enabler server may receive, within a preset time range, second request messages sent by all the terminal devices in the terminal device group, the enabler server may determine the application server based on information about all the terminal devices in the group (for example, the location information of the terminal devices).

If the enabler server does not receive, within the preset time range, the second request messages sent by all the terminal devices in the terminal device group, the enabler server may determine an application server based on information about a terminal device that has sent the second request message, and associate information about the application server with the terminal device list and/or the group identifier. When a terminal device in the same terminal device list or having the same group identifier subsequently requests to discover the application server, the enabler server may send the stored information about the application server to the subsequent terminal device.

In this technical solution, the second request message may include discovery information of the terminal device. After receiving the indication information, the enabler server may determine, based on third indication information, that a same application server needs to be determined for the plurality of terminal devices, and may determine, for the plurality of terminal devices based on the fourth indication information, an application server that can satisfy an application service requirement of the plurality of terminal devices. Implementation of this technical solution helps improve the efficiency of determining, by the enabler server, the same application server for the plurality of terminal devices, and helps the enabler server determine a more appropriate application server for the plurality of terminal devices.

With reference to the second aspect, in some implementations of the second aspect, the second response message further includes second reporting indication information, and the second reporting indication information indicates to send the information about the application server to the enabler server.

When the second response message includes an indication for indicating the terminal device to report the information about the selected application server, after selecting the application server from the plurality of application servers, the terminal device sends the information about the application server to the enabler server. After obtaining the information about the application server, the enabler server may directly send the information about the application server to another terminal device in the terminal device group, without a need of sending a request message to the terminal device to obtain the application server. Therefore, implementation of this technical solution helps improve the efficiency of determining, by the enabler server, the same application server for the plurality of terminal devices.

According to a third aspect, an application server discovery method is provided. The method includes: A configuration server receives a third request message, where the third request message is used to request to discover a target enabler server, and the target enabler server is configured to serve a plurality of terminal devices after application context relocation; the configuration server determines, based on information about a terminal device group, whether to perform application context relocation for the plurality of terminal devices; and the configuration server sends a third response message, where the third response message indicates whether to perform application context relocation for the plurality of terminal devices in a terminal device group.

It should be further noted that the third request message herein is specifically used to request to discover the target enabler server for a terminal device in the terminal device group or for all the terminal devices in the terminal device group.

In a possible implementation, that the configuration server determines, based on information about a terminal device group, whether to perform application context relocation for the plurality of terminal devices includes: The configuration server determines, based on the information about the terminal device group, that a first terminal device belongs to the terminal device group; the configuration server determines, based on a status of obtaining an application service by the terminal device in the terminal device group, whether to perform application context relocation; the configuration server determines, based on the information about the terminal device group, an enabler server that serves the terminal device group; and the configuration server determines that the enabler server that serves the terminal device group is the target enabler server.

In a possible implementation, the third request message further includes the information about the terminal device group.

In a possible implementation, the third response message includes information about the target enabler server. In this case, the third response message indicates that the request for discovering the target enabler server is successful.

In another possible implementation, the third response message includes indication information, and the indication information indicates that the request for discovering the target enabler server fails. Optionally, in this case, the third response message may include information about an enabler server that currently serves the terminal device.

In a possible implementation, the third request message includes first discovery information and/or second discovery information, the first discovery information indicates to discover the enabler server for the plurality of terminal devices, and the second discovery information is used to describe a service range expected by the plurality of terminal devices; and the configuration server determines the enabler server based on the first discovery information and/or the second discovery information.

The first discovery information may be an explicit indication, to be specific, directly indicate that the enabler server that needs to be discovered is configured to serve the plurality of terminal devices. The first discovery information may alternatively be an implicit indication. For example, the first discovery information is the terminal device list. Therefore, after receiving the first request message, the configuration server may also identify that the enabler server that is requested to be discovered is configured to serve the plurality of terminal devices.

In a possible implementation, the configuration server determines that application context relocation needs to be performed for one or more terminal devices in the terminal device group.

In this technical solution, the third request message received by the configuration server includes a device identifier of the first terminal device and location information of a current location of the first terminal device. The configuration server sends the third response message based on content of the third request message, to determine whether application context relocation needs to be performed for the plurality of terminal devices in the terminal device group. In comparison with a case in which context relocation is performed only for the first terminal device, the technical solution provided in this application helps the configuration server determine a same enabler server for the plurality of terminal devices in the terminal device group when determining to perform context relocation for one terminal device in the terminal device group.

In addition, the configuration server determines, by using the information about the terminal device group including the plurality of terminal devices, whether to perform application context relocation for the plurality of terminal devices in the terminal device group. In comparison with a case in which only information about one terminal device is considered to determine whether to perform application context relocation, this technical solution helps the configuration server determine the same enabler server for the plurality of terminal devices in the terminal device group in a processing procedure of application context relocation.

With reference to the third aspect, in some implementations of the third aspect, the information about the terminal device group includes a terminal device list and/or a group identifier, the terminal device list includes device identifiers of the plurality of terminal devices, and the group identifier identifies the terminal device group.

When the information about the terminal device group includes the terminal device list, the configuration server may first determine, based on the terminal device list and the device identifier of the first terminal device, whether the first terminal device is included in the terminal device list. If determining that the first terminal device is included in the terminal device list, the configuration server may obtain a requirement that the first terminal device needs to select an enabler server that is the same as that of another terminal device in the terminal device group, to perform application context relocation for the plurality of terminal devices in the terminal device group. If determining that the first terminal device is not included in the terminal device list, the configuration server performs a conventional enabler server discovery operation.

According to the application server discovery method provided in this technical solution, before application context relocation is performed for the plurality of terminal devices, an identity of the first terminal device is first confirmed, so that accuracy of performing application context relocation for the plurality of terminal devices is improved, and impact, on an application service of another terminal device, caused by application context relocation of one terminal device is reduced.

When the information about the terminal device group includes the group identifier of the terminal device group, after receiving the third request message, if the configuration server obtains the group identifier, of the terminal device group, included in the third request message, the configuration server may directly use the group identifier to determine whether the first terminal device belongs to the terminal device group, to determine whether the first terminal device has the requirement of selecting the enabler server that is the same as that of the another terminal device in the terminal device group.

Because an amount of data included in the group identifier is small, including the group identifier in the third request message does not cause an excessively large amount of data in the third request message to some extent. This helps ensure transmission efficiency of the third request message. When the configuration server determines the first terminal device based on the group identifier, efficiency of processing the third request message by the configuration server is also improved.

With reference to the third aspect, in some implementations of the third aspect, the information about the terminal device group further includes location information, and the location information is location information of the plurality of terminal devices.

When the information about the terminal device group includes the location information of the plurality of terminal devices, the configuration server may determine, with reference to the location information of the current location of the first terminal device and location information of another terminal device in the terminal device group, service statuses of different terminal devices after a new enabler server is determined. This helps the configuration server determine a more appropriate enabler server for the plurality of terminal devices, and helps reduce adverse impact of a context relocation event of the terminal device on obtaining the service by the another terminal device in the terminal device group.

With reference to the third aspect, in some implementations of the third aspect, when the configuration server determines to perform application context relocation for the plurality of terminal devices, the third response message includes the information about the target enabler server, the third response message further includes the terminal device list and/or the group identifier, the terminal device list includes the device identifiers of the plurality of terminal devices, and the group identifier indicates the terminal device group including the plurality of terminal devices.

When determining to perform application context relocation for the plurality of terminal devices, the configuration server directly sends, to the terminal device, the information about the enabler server obtained through application context relocation, and the terminal device may directly request, from the target enabler server, to obtain the target application server obtained through application context relocation.

The third response message includes the terminal device list. The terminal device may determine, based on the terminal device list, that the target enabler server is the enabler server that serves the plurality of terminal devices in the terminal device group, and further determine that the configuration server performs context relocation for the plurality of terminal devices in the terminal device group.

Implementation of this technical solution helps the terminal device determine, based on content of the third response message, whether application context relocation request is successful, and helps the terminal device determine whether the obtained enabler server is an enabler server selected for the plurality of terminal devices in the terminal device group.

In a possible implementation, the third response message further includes the group identifier and/or the location information, the group identifier indicates the terminal device group, and the location information is the location information of the plurality of terminal devices.

According to a fourth aspect, an application server discovery method is provided. The method includes: An enabler server receives a fourth request message, where the fourth request message includes a terminal device list and/or a group identifier, the terminal device list includes device identifiers of a plurality of terminal devices, the group identifier identifies a terminal device group including the plurality of terminal devices, and the fourth request message is used to request to perform application context relocation for the plurality of terminal devices; and the enabler server performs application context relocation for the plurality of terminal devices.

In a possible implementation, the fourth request message includes third discovery information and/or fourth discovery information, the third discovery information indicates to discover an application server for the plurality of terminal devices, and the fourth discovery information is used to describe an application service range expected by the plurality of terminal devices; and the enabler server determines the application server based on the third discovery information and/or the fourth discovery information.

The third discovery information may be an explicit indication, to be specific, directly indicate that the application server that needs to be discovered is configured to serve the plurality of terminal devices. The third discovery information may alternatively be an implicit indication. For example, the third discovery information is the terminal device list. Therefore, after receiving the second request message, the enabler server may also identify that the application server that is requested to be discovered is configured to provide an application service for the plurality of terminal devices.

In a possible implementation, the enabler server determines that application context relocation needs to be performed for one or more terminal devices in the terminal device group.

The fourth request message includes the terminal device list and/or the group identifier. After receiving the fourth request message, the enabler server may determine, based on the terminal device list and/or the group identifier, that the same application server needs to be selected for the plurality of terminal devices, to help improve efficiency of processing an application server discovery request by the enabler server.

With reference to the fourth aspect, in some implementations of the fourth aspect, the enabler server sends a first notification message to the application server, where the first notification message includes the terminal device list, and the first notification message notifies the application server to perform application context relocation for the plurality of terminal devices.

In a possible implementation, the first notification message further notifies the application server to first perform application context relocation for the first terminal device.

In this technical solution, the enabler server sends, to the application server, a requirement for performing application context relocation for the plurality of terminal devices. After receiving the notification message, the application server may determine information about a terminal device for which application context relocation needs to be performed. Therefore, the application server may determine, with reference to a status of the application service of the terminal device, an occasion for performing application context relocation. Implementation of this technical solution helps reduce impact of application context relocation on the application service of the terminal device. Cooperation between the enabler server and the application server can further improve efficiency of performing context relocation for the plurality of terminal devices by a network.

With reference to the fourth aspect, in some implementations of the fourth aspect, the enabler server sends a second notification message to the plurality of terminal devices, where the second notification message includes information about a target enabler server and/or information about a target application server, the target enabler server is configured to serve the plurality of terminal devices after application context relocation, and the target application server is configured to provide an application service for the plurality of terminal devices after application context relocation.

In this technical solution, at least one second terminal device may directly obtain, by receiving the second notification message, the information about the enabler server and the information about the application server that are obtained through application context relocation, and does not need to request the configuration server to perform application context relocation again. This helps improve efficiency of performing application context relocation for the plurality of terminal devices, and helps reduce consumption of communication signaling between the terminal device and a data network in an application context relocation process.

For explanations and beneficial effects of related content of the technical solutions of the method and the product provided below, refer to the content of the related technical solutions in the first aspect to the fourth aspect. Details are not described below again.

According to a fifth aspect, an application server discovery method is provided. The method includes: A first terminal device sends a first request message, where the first request message is used to request to discover an enabler server; and the first terminal device receives a first response message, where the first response message includes information about the enabler server.

With reference to the fifth aspect, in some implementations of the fifth aspect, information about a terminal device group includes one or more of the following information:
a group identifier, a quantity of terminal devices, location information, or a service identifier, where the group identifier identifies the terminal device group including the plurality of terminal devices, the plurality of terminal devices include the first terminal device, the quantity of terminal devices is a quantity of terminal devices included in the terminal device group, the location information is location information of the plurality of terminal devices, and the service identifier identifies a service that needs to be obtained by the plurality of terminal devices.

With reference to the fifth aspect, in some implementations of the fifth aspect, the first request message includes the information about the terminal device group.

With reference to the fifth aspect, in some implementations of the fifth aspect, the first request information includes first discovery information and/or second discovery information, the first discovery information indicates to discover the enabler server for the plurality of terminal devices, and the second discovery information is used to describe a service range expected by the plurality of terminal devices; and a configuration server determines the enabler server based on the first discovery information and/or the second discovery information.

With reference to the fifth aspect, in some implementations of the fifth aspect, the first response message includes information about a plurality of enabler servers, the plurality of enabler servers include the enabler server, and the first terminal device selects one enabler server from the plurality of enabler servers to serve the first terminal device, and sends information about the enabler server to the configuration server.

With reference to the fifth aspect, in some implementations of the fifth aspect, the first response message further includes first reporting indication information, where the first reporting indication information indicates to send the information about the enabler server to the configuration server; and the first terminal device sends the information about the enabler server to the configuration server based on the first reporting indication information.

With reference to the fifth aspect, in some implementations of the fifth aspect, the first response message further includes second reporting indication information, where the second reporting indication information indicates to send information about an application server to the enabler server, and the application server is configured to provide an application service for the plurality of terminal devices; and the first terminal device sends the information about the application server to the enabler server based on the second reporting indication information.

According to a sixth aspect, an application server discovery method is provided. The method includes: A first terminal device sends a second request message, where the second request message is used to request to discover an application server, and the application server is configured to provide an application service for a plurality of terminal devices; and the first terminal device receives a second response message, where the second response message includes information about the application server.

With reference to the sixth aspect, in some implementations of the sixth aspect, information about a terminal device group includes one or more of the following information:
a group identifier, a quantity of terminal devices, location information, or a service identifier, where the group identifier identifies the terminal device group including the plurality of terminal devices, the plurality of terminal devices include the first terminal device, the quantity of terminal devices is a quantity of terminal devices included in the terminal device group, the location information is location information of the plurality of terminal devices, and the service identifier identifies a service that needs to be obtained by the plurality of terminal devices.

With reference to the sixth aspect, in some implementations of the sixth aspect, the second request message includes the information about the terminal device group.

With reference to the sixth aspect, in some implementations of the sixth aspect, the second request information includes third discovery information and/or fourth discovery information, the third discovery information indicates to discover the application server for the plurality of terminal devices, and the fourth discovery information is used to describe an application service range expected by the plurality of terminal devices; and an enabler server determines the application server based on the third discovery information and/or the fourth discovery information.

With reference to the sixth aspect, in some implementations of the sixth aspect, the second response message includes information about a plurality of application servers, and the first terminal device selects one application server from the plurality of application servers to provide an application for the first terminal device, and sends information about the application server to the enabler server.

With reference to the sixth aspect, in some implementations of the sixth aspect, the second response message further includes second reporting indication information, where the second reporting indication indicates to send the information about the application server to the enabler server; and the first terminal device sends the information about the application server to the enabler server based on the second reporting indication.

According to a seventh aspect, an application server discovery method is provided. The method includes: A first entity sends a third request message, where the third request message is used to request to discover a target enabler server, and the target enabler server is configured to serve a plurality of terminal devices after application context relocation; and the first entity receives a third response message, where the third response message indicates whether to perform application context relocation for the plurality of terminal devices in a terminal device group, and the plurality of terminal devices include a first terminal device.

It should be further noted that the third request message herein is specifically used to request to discover the target enabler server for a terminal device in the terminal device group or for all the terminal devices in the terminal device group.

With reference to the seventh aspect, in some implementations of the seventh aspect, information about the terminal device group includes one or more of the following information:
a group identifier, a quantity of terminal devices, location information, or a service identifier, where the group identifier identifies the terminal device group including the plurality of terminal devices, the plurality of terminal devices include the first terminal device, the quantity of terminal devices is a quantity of terminal devices included in the terminal device group, the location information is location information of the plurality of terminal devices, and the service identifier identifies a service that needs to be obtained by the plurality of terminal devices.

With reference to the seventh aspect, in some implementations of the seventh aspect, the third request message further includes the information about the terminal device group.

With reference to the seventh aspect, in some implementations of the seventh aspect, when a configuration server determines to perform application context relocation for the plurality of terminal devices, the third response message includes information about the target enabler server, and the target enabler server is configured to serve the plurality of terminal devices after application context relocation; and the third response message further includes a group identifier and/or a terminal device list, the group identifier identifies the device group including the plurality of terminal devices, and the terminal device list includes device identifiers of the plurality of terminal devices.

With reference to the seventh aspect, in some implementations of the seventh aspect, the third response message further includes the group identifier and/or the location information, the group identifier indicates the terminal device group, and the location information is the location information of the plurality of terminal devices.

According to an eighth aspect, an application server discovery method is provided. The method includes: A first entity sends a fourth request message, where the fourth request message includes a terminal device list and/or a group identifier, the terminal device list includes device identifiers of a plurality of terminal devices, the group identifier identifies a terminal device group including the plurality of terminal devices, and the fourth request message is used to request to perform application context relocation for the plurality of terminal devices.

According to a ninth aspect, a communication system is provided. The communication system includes a configuration server, an enabler server, and a first terminal device, where the configuration server is configured to implement the first aspect and any possible implementation of the first aspect, the enabler server is configured to implement the second aspect and any possible implementation of the second aspect, and the first terminal device is configured to implement the fifth aspect, any possible implementation of the fifth aspect, the sixth aspect, and any possible implementation of the sixth aspect.

According to a tenth aspect, a communication system is provided. The communication system includes a configuration server, an enabler server, and a first entity, where the configuration server is configured to implement the third aspect and any possible implementation of the third aspect, the enabler server is configured to implement the fourth aspect and any possible implementation of the fourth aspect, and the first entity is configured to implement the seventh aspect, any possible implementation of the seventh aspect, the eighth aspect, and any possible implementation of the eighth aspect.

According to an eleventh aspect, an application server discovery apparatus is provided. The apparatus includes a processing unit and a transceiver unit, where the transceiver unit is configured to receive a first request message, the first request message is used to request to discover an enabler server, and the enabler server is configured to serve a plurality of terminal devices;
the processing unit is configured to determine the enabler server based on information about a terminal device group, where the terminal device group includes the plurality of terminal devices; and
the transceiver unit is further configured to send a first response message, where the first response message includes information about the enabler server.

With reference to the eleventh aspect, in some implementations of the eleventh aspect, the first request message includes first discovery information and/or second discovery information, the first discovery information indicates to discover the enabler server for the plurality of terminal devices, and the second discovery information is used to describe a service range expected by the plurality of terminal devices; and the processing unit is further configured to determine the enabler server based on the first discovery information and/or the second discovery information.

With reference to the eleventh aspect, in some implementations of the eleventh aspect, the first response message includes information about a plurality of enabler servers, the plurality of enabler servers include the enabler server, and the transceiver unit is further configured to receive the information about the enabler server.

With reference to the eleventh aspect, in some implementations of the eleventh aspect, the transceiver unit is further configured to send selection indication information to the enabler server, where the selection indication information indicates the enabler server to select a same application server for the plurality of terminal devices.

According to a twelfth aspect, an application server discovery apparatus is provided. The apparatus includes a processing unit and a transceiver unit, where the transceiver unit is configured to receive a second request message, the second request message is used to request to discover an application server, and the application server is configured to provide an application service for a plurality of terminal devices;
the processing unit is configured to determine the application server based on information about a terminal device group, where the terminal device group includes the plurality of terminal devices; and
the transceiver unit is further configured to send a second response message, where the second response message includes information about the application server.

With reference to the twelfth aspect, in some implementations of the twelfth aspect, the second request message includes third discovery information and/or fourth discovery information, the third discovery information indicates to discover the application server for the plurality of terminal devices, and the fourth discovery information is used to describe an application service range expected by the plurality of terminal devices; and the processing unit is further configured to determine the application server based on the third discovery information and/or the fourth discovery information.

With reference to the twelfth aspect, in some implementations of the twelfth aspect, the second response message includes information about a plurality of application servers, the plurality of application servers include the application server, and the transceiver unit is further configured to receive the information about the application server.

According to a thirteenth aspect, an application server discovery apparatus is provided. The apparatus includes a transceiver unit and a processing unit, where the transceiver unit is configured to receive a third request message, the third request message is used to request to discover a target enabler server, and the target enabler server is configured to serve a plurality of terminal devices after application context relocation; the processing unit is configured to determine, based on information about a terminal device group, whether to perform application context relocation for the plurality of terminal devices; and
the transceiver unit is further configured to send a third response message, where the third response message indicates whether to perform application context relocation for the plurality of terminal devices in the terminal device group.

With reference to the thirteenth aspect, in some implementations of the thirteenth aspect, the information about the terminal device group includes a terminal device list, and the terminal device list includes device identifiers of the plurality of terminal devices; and the processing unit is specifically configured to determine, based on the terminal device list and a device identifier of a first terminal device, that the first terminal device belongs to the terminal device group.

According to a fourteenth aspect, an application server discovery apparatus is provided. The apparatus includes a processing unit and a transceiver unit, where the transceiver unit is configured to receive a fourth request message, the fourth request message includes a terminal device list and/or a group identifier, the terminal device list includes device identifiers of a plurality of terminal devices, the group identifier identifies a terminal device group including the plurality of terminal devices, and the fourth request message is used to request to perform application context relocation for the plurality of terminal devices; and
the processing unit is configured to perform application context relocation for the plurality of terminal devices.

With reference to the fourteenth aspect, in some implementations of the fourteenth aspect, the transceiver unit is further configured to send a first notification message to an application server, where the first notification message includes the terminal device list, and the first notification message notifies the application server to perform application context relocation for the plurality of terminal devices.

With reference to the fourteenth aspect, in some implementations of the fourteenth aspect, the transceiver unit is further configured to send a second notification message to the plurality of terminal devices, where the second notification message includes information about a target enabler server and/or information about a target application server, the target enabler server is configured to serve the plurality of terminal devices after application context relocation, and the target application server is configured to provide an application service for the plurality of terminal devices after application context relocation.

According to a fifteenth aspect, an application server discovery apparatus is provided. The apparatus includes a processor, configured to execute computer instructions stored in a memory, so that the apparatus performs the method according to the first aspect or any possible implementation of the first aspect or the method according to the third aspect or any possible implementation of the third aspect.

According to a sixteenth aspect, an application server discovery apparatus is provided. The apparatus includes a processor, configured to execute computer instructions stored in a memory, so that the apparatus performs the method according to the second aspect or any possible implementation of the second aspect or the method according to the fourth aspect or any possible implementation of the fourth aspect.

According to a seventeenth aspect, an application server discovery apparatus is provided. The apparatus includes a processor, configured to execute computer instructions stored in a memory, so that the apparatus performs the method according to the fifth aspect or any possible implementation of the fifth aspect or the method according to the sixth aspect or any possible implementation of the sixth aspect.

According to an eighteenth aspect, an application server discovery apparatus is provided. The apparatus includes a processor, configured to execute computer instructions stored in a memory, so that the apparatus performs the method according to the seventh aspect or any possible implementation of the seventh aspect or the method according to the eighth aspect or any possible implementation of the eighth aspect.

According to a nineteenth aspect, a computer program product is provided. The computer program product includes computer program code. When the computer program code runs on a computer, the method according to the first aspect or any possible implementation of the first aspect or the method according to the third aspect or any possible implementation of the third aspect is performed.

According to a twentieth aspect, a computer program product is provided. The computer program product includes computer program code. When the computer program code runs on a computer, the method according to the second aspect or any possible implementation of the second aspect or the method according to the fourth aspect or any possible implementation of the fourth aspect is performed.

According to a twenty-first aspect, a computer program product is provided. The computer program product includes computer program code. When the computer program code runs on a computer, the method according to the fifth aspect or any possible implementation of the fifth aspect or the method according to the sixth aspect or any possible implementation of the sixth aspect is performed.

According to a twenty-second aspect, a computer program product is provided. The computer program product includes computer program code. When the computer program code runs on a computer, the method according to the seventh aspect or any possible implementation of the seventh aspect or the method according to the eighth aspect or any possible implementation of the eighth aspect is performed.

According to a twenty-third aspect, a computer-readable storage medium is provided. The computer-readable storage medium stores computer instructions. When the computer instructions are run on a computer, the method according to the first aspect or any possible implementation of the first aspect or the method according to the third aspect or any possible implementation of the third aspect is performed.

According to a twenty-fourth aspect, a computer-readable storage medium is provided. The computer-readable storage medium stores computer instructions. When the computer instructions are run on a computer, the method according to the second aspect or any possible implementation of the second aspect or the method according to the fourth aspect or any possible implementation of the fourth aspect is performed.

According to a twenty-fifth aspect, a computer-readable storage medium is provided. The computer-readable storage medium stores computer instructions. When the computer instructions are run on a computer, the method according to the fifth aspect or any possible implementation of the fifth aspect or the method according to the sixth aspect or any possible implementation of the sixth aspect is performed.

According to a twenty-sixth aspect, a computer-readable storage medium is provided. The computer-readable storage medium stores computer instructions. When the computer instructions are run on a computer, the method according to the seventh aspect or any possible implementation of the seventh aspect or the method according to the eighth aspect or any possible implementation of the eighth aspect is performed.

According to a twenty-seventh aspect, a chip is provided. The chip includes a processor, configured to read instructions stored in a memory. When the processor executes the instructions, the chip is enabled to implement the method according to the first aspect or any possible implementation of the first aspect or the method according to the third aspect or any possible implementation of the third aspect.

According to a twenty-eighth aspect, a chip is provided. The chip includes a processor, configured to read instructions stored in a memory. When the processor executes the instructions, the chip is enabled to implement the method according to the second aspect or any possible implementation of the second aspect or the method according to the fourth aspect or any possible implementation of the fourth aspect.

According to a twenty-ninth aspect, a chip is provided. The chip includes a processor, configured to read instructions stored in a memory. When the processor executes the instructions, the chip is enabled to implement the method according to the fifth aspect or any possible implementation of the fifth aspect or the method according to the sixth aspect or any possible implementation of the sixth aspect.

According to a thirtieth aspect, a chip is provided. The chip includes a processor, configured to read instructions stored in a memory. When the processor executes the instructions, the chip is enabled to implement the method according to the seventh aspect or any possible implementation of the seventh aspect or the method according to the eighth aspect or any possible implementation of the eighth aspect.

### BRIEF DESCRIPTION OF DRAWINGS

FIG. 1 is a schematic of a network architecture applicable to embodiments of this application;
FIG. 2 is a diagram of an EAS discovery procedure applicable to an embodiment of this application;
FIG. 3 is a diagram of an EES discovery procedure applicable to an embodiment of this application;
FIG. 4 is a diagram of a T-EAS discovery procedure applicable to an embodiment of this application;
FIG. 5 is a diagram of a T-EES discovery procedure applicable to an embodiment of this application;
FIG. 6 is a diagram of an application server discovery method according to an embodiment of this application;
FIG. 7 is a diagram of another application server discovery method according to an embodiment of this application;
FIG. 8 is a diagram of still another application server discovery method according to an embodiment of this application;
FIG. 9 is a diagram of still another application server discovery method according to an embodiment of this application;
FIG. 10 is a diagram of still another application server discovery method according to an embodiment of this application;
FIG. 11 is a diagram of still another application server discovery method according to an embodiment of this application;
FIG. 12 is a diagram of still another application server discovery method according to an embodiment of this application;
FIG. 13 is a diagram of still another application server discovery method according to an embodiment of this application;
FIG. 14 is a diagram of still another application server discovery method according to an embodiment of this application;
FIG. 15 is a diagram of still another application server discovery method according to an embodiment of this application;
FIG. 16 is a diagram of still another application server discovery method according to an embodiment of this application;
FIG. 17 is a schematic of a communication apparatus according to an embodiment of this application; and
FIG. 18 is a schematic of a communication device according to an embodiment of this application.

### DESCRIPTION OF EMBODIMENTS

The following describes technical solutions of this application with reference to accompanying drawings.

In embodiments of this application, unless otherwise specified, a quantity of nouns indicates "a singular noun or a plural noun", namely, "one or more". "At least one" means one or more, "a plurality of" means two or more, and "a plurality of" in "one or more" means two or more similar types. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. For example, A/B indicates A or B. "At least one item (piece) of the following" or a similar expression thereof means any combination of the items, including a singular item (piece) or any combination of a plurality of items (pieces). For example, at least one (piece) of a, b, or c may represent: a, b, c, a-b, a-c, b-c, or a-b-c, where a, b, and c may be singular or plural.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a future 6th generation (6th generation, 6G) system.

A terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a public land mobile network (public land mobile network, PLMN), or the like. This is not limited in embodiments of this application.

A network device in embodiments of this application may be a device configured to communicate with a terminal device. The network device may be a base transceiver station (base transceiver station, BTS) in a global system for mobile communications (global system for mobile communications, GSM) system or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a PLMN network, or the like. This is not limited in embodiments of this application.

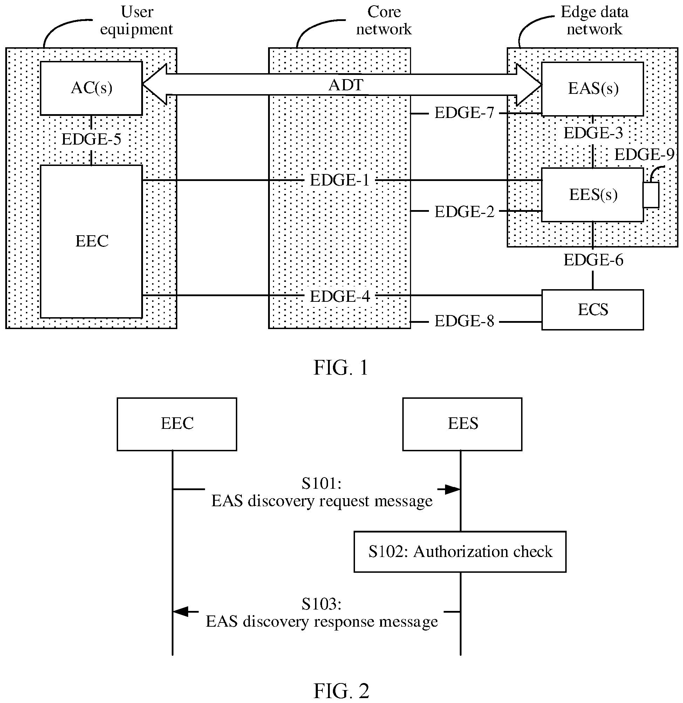

FIG. 1 is a schematic of a network architecture applicable to embodiments of this application.

A user equipment (UE) includes one or more application clients (application clients, ACs) and edge enabler clients (edge enabler clients, EECs). The user equipment may establish a connection to an edge data network through the application client and/or the edge enabler client, to obtain an application service.

The application client (AC) is used by an application user to obtain an application service from an application server. The application client is a client program of an application on a terminal side. The application client may be connected to an application server on a cloud to obtain an application service; or may be connected to an edge application server (EAS) deployed and running in one or more edge data networks (edge data networks, EDNs) to obtain an application service.

The edge enabler client (EEC) is configured to register, with an edge enabler server (edge enabler server, EES), information about the EEC and information about the application client, performs security authentication and authentication, obtains an internet protocol (internet protocol, IP) address of an EAS from the EES, and provides an edge computing enabling capability for the application client. For example, the EEC provides an EAS discovery service and returns the IP address of the EAS to the application client.

The edge data network (EDN) includes an edge application server (EAS) and an edge enabler server (EES). The edge data network may provide an application service for a user equipment through collaboration between the edge application server and the edge enabler server.

The edge application server (EAS) may also be referred to as an edge application, an application instance, an edge application instance, a multi-access edge computing (multi-access edge computing, MEC) application (server), or an EAS function. The EAS is an application deployed in an edge data network, and specifically refers to a server application (for example, a social medium, augmented reality (augmented reality, AR), or virtual reality (virtual reality, VR)). One or more EASs can be deployed for an application in one or more EDNs. EASs deployed and running in different EDNs can be considered as different EASs of an application. The EASs can share one domain name, and use one IP address or use different IP addresses.

The edge enabler server (EES) is configured to provide some enabling capabilities for an application instance deployed in the EDN, to better support a deployment request of an application on an MEC. The EES may support registration of an edge application, authentication and authorization on a UE, provide IP address information of an application instance for the UE, and the like; may further support obtaining of an identifier and the IP address information of the application instance; and further send the identifier and the IP address information of the application instance to an edge data network configuration server (edge configuration server, ECS).

An EES is deployed in an EDN. Generally, an EAS is registered with an EES, or information about an EAS is configured on an EES by using a management system. The EES is referred to as an EES associated with the EAS. The EES may control and manage the EAS registered with and configured on the EES.

The edge configuration server (ECS) is responsible for EDN configuration, for example, providing information about the EES for the UE; and may further directly provide information about an application instance for the UE, and interact with a domain name resolution system (domain name resolution system, DNS) of an application to obtain the information about the application instance, so as to obtain the information about the application instance and an IP address from another functional entity, and store the information about the application instance and the IP address.

As shown in FIG. 1, an application data route (application data traffic, ADT) is disposed between the application client and the edge application server, and communication interfaces are disposed between the application client and the edge enabler client, between the edge application server and the edge enabler server, between the edge enabler server and the edge configuration server, and the like.

In the network architecture shown in FIG. 1, an application user signs a service agreement with an application provider, so that a service is provided to the application user. The application user logs in to an application client on a terminal, and performs communication through a connection between the application client and the EAS. An enabler client is a middleware layer, and is generally located in an operating system, or is located between the application client and the operating system. The application client may obtain an edge enabling service from the enabler client through an application programming interface (application programming interface, API).

Based on the network architecture shown in FIG. 1, a process of application context relocation (application context relocation, ACR) is as follows:
(1) Detection of application context relocation: It is determined that context relocation may need to be performed. In this case, some events are usually detected by a detection entity, for example, a UE location change or a UE user plane path update.
(2) Decision on application context relocation: A decision-making entity determines that context relocation needs to be performed.
(3) Execution of application context relocation: An application context is mainly transferred from a source EAS to a target EAS, and may further include information for notifying a terminal of the target EAS, and a notification including network context relocation completion and related information of the target EAS (for example, an address of the target EAS, and N6 routing information corresponding to the target EAS).
(4) Cleanup after application context relocation: A plurality of entities are related. For example, an application client initiates a new socket (socket) connection to the target EAS.

Before embodiments of this application are formally described, some professional terms that may be used in the following embodiments are first explained.
1. Edge computing (edge computing), also referred to as edge operation, is a distributed computing architecture. Computing of applications, data, and services is moved from a network central node to a network logical edge node for processing. Edge computing divides a large service that is originally and completely processed by the central node into smaller and easier-to-manage parts, and distributes the parts to the edge node for processing. The edge node is closer to a user terminal device. This can speed up data processing and sending and reduce a delay. In this architecture, data analysis and knowledge generation are closer to data sources and therefore are more suitable for processing big data.
2. Multi-access edge computing (MEC) can use a radio access network to nearby provide a service and a cloud computing function required for a telecommunication user information technology (information technology, IT), to create a carrier-class service environment with high performance, a low delay, and high bandwidth, accelerate rapid download of various pieces of content, services, and applications in a network, and enable a consumer to enjoy uninterrupted high-quality network experience.
3. A data network (data, DN) is a service network of an operator or a third party, and may provide a service, for example, an operator service or an internet service, for a user equipment.
4. A local area data network (local area data network, LADN) may be an access point (access point) of a data network that is very close to an attachment point (attachment point) of a user.
5. An edge data network (EDN): In one general understanding, the EDN corresponds to only one data network, is a special local data network (LDN) including an edge enabling function, can be identified by using a data network access identifier (data network access identifier, DNAI) and a data network name (data network name, DNN), and is a network logical concept. In another understanding for the EDN, the EDN is an equivalent concept of a central cloud, may be understood as a local data center (a geographical location concept), may be identified by using a DNAI, and may include a plurality of local data networks.
6. Application context (application context) refers to running status information related to one user or a group of users, and optionally, may further include a context subscribed by the one or more users from a source EAS and a core network, for example, a subscribed transaction identifier. Optionally, the application context may further include a context of the one or more users on an EES, for example, a transaction identifier of subscription performed by the source EAS to the one or more users.
7. Application context relocation: In an edge application running process, when a UE moves out of a current service area, for example, the UE moves between EDNs or the UE moves between LADNs, an edge application server that currently provides a service may not continue to serve the currently running application, or an edge application server that currently provides a service is not an optimal application server that can serve the UE, and another edge application server may be more suitable for serving an application client on the UE. Therefore, a new edge application server needs to be used to replace the currently serving edge application server, to better serve the UE. In this process, an application service is temporarily suspended or interrupted, and an application context needs to be relocated to the new edge application server, so as to ensure that impact of application running interruption is minimized.
8. Data network access identifier (DNAI) is a user plane identifier for accessing a data network.

With reference to FIG. 2, the following first describes an EAS discovery procedure applicable to an embodiment of this application.

The EAS discovery procedure is used to determine one or more application servers that can provide an application service for an application client. After an EEC obtains address information of an EES, for example, uniform resource locator (uniform resource locator, URL) information, an IP address, or other information. After an EAS discovery policy of an edge computing service provider (edge computing service provider, ESCP) is configured for the EES, EAS discovery can be performed.

S101: The EEC sends an EAS discovery request message to the EES.

The EAS discovery request includes an EEC ID and a security credential, and may include an EAS discovery filter (discovery filter) parameter to retrieve information about a particular EAS or a particular type of EAS (for example, a game application).

Table 1 shows information that may be included in the EAS discovery request message.

**Table 1 Information included in the EAS discovery request message**

| Information element | Status | Description |
|---|---|---|
| Requester identifier | Mandatory | An identifier of a requester (for example, an EEC ID) |
| UE identifier | Optional | An identifier of a UE (for example, a generic public subscription identifier (generic public subscription identifier, GPSI) or an identity token) |
| Security credential | Mandatory | Security credential generated when an edge computing service is successfully authorized |
| EAS discovery filter parameter | Optional | This parameter is for determining a group of features of the required EAS. |
| UE location | Optional | Location information of the UE |
| Target DNAI | Optional | Information about the target DNAI associated with a potential target EAS |

S102: The EES checks whether the EEC is authorized to discover the requested EAS.

When the EES determines, through the check, that the EEC is authorized, the EES identifies the EAS based on the EAS discovery filter parameter and the location of the user equipment.

Table 2 shows information that may be included in the EAS discovery filter parameter.

**Table 2 Information included in the EAS discovery filter parameter**

| Information element | Status | Description |
|---|---|---|
| Application client feature list | Optional | This information element is for describing an AC that needs to match the EAS. |
| AC profile | Mandatory | This information element includes an AC profile for determining a parameter of the matched EAS. |
| EAS feature list | Optional | This information element is for describing features of the required EAS. |
| EAS ID | Optional | Identifier of the required EAS |
| EAS provider identifier | Optional | Identifier of a required EAS provider program |
| EAS type | Optional | Category or type of the required EAS (for example, vehicle-to-everything) |
| EAS schedule | Optional | Availability plan required by the EAS (for example, a time window) |
| EAS geographical service area | Optional | Location at which an EAS service is available (for example, a geographical area and a route) |
| EAS topological service area | Optional | Topology area (for example, an identifier of a cell and a tracking area identity (TAI)). An EAS service of the cell is available. |
| Service continuity support | Optional | Whether service continuity support is required |
| EAS state | Optional | State of the EAS (for example, enabled or disabled) |
| Service right level | Optional | Required service right level |
| Service feature | Optional | Required service functions, such as single-player game and multi-player game services |

Table 3 shows information that may be included in the AC profile of the EAS discovery filter parameter.

**Table 3 Information included in the AC profile**

| Information element | Status | Description |
|---|---|---|
| AC identity | Mandatory | Identifier of the AC |
| Application client type | Optional | Category or type of the AC (for example, vehicle-to-everything) |
| Preferred ECSP list | Optional | This information element indicates, to an ECS, an ECSP preferred by the AC for a service provisioning request. The ECS may use this information during EES selection. |
| Application client plan | Optional | Expected AC operation timesheet (for example, a time window) |
| Expected application client geographic service area | Optional | An expected location for deploying the UE in an AC operation plan, where the geographic information may indicate a geographical point, a polygon, a route, a signal map, or a road point set |
| Service continuity support | Optional | Indicates whether an application requires service continuity support. |
| List of EASs | Optional | List of EASs that serve the AC and a key performance indicator (key performance indicator, KPI) of a service required by the AC |
| EAS identity | Mandatory | Identifier of the EAS |
| Application client service KPI | Optional | KPI required by the AC to receive a service of the EAS |

In some embodiments, the EES does not obtain the EAS discovery filter parameter, and the EES identifies the EAS based on user equipment-specific service information on the EES and a location of a terminal device.

In some embodiments, the EES does not obtain the EAS discovery filter parameter, and the EES identifies the EAS by applying an ESCP policy (for example, based only on the location of the terminal device).

In some embodiments, the EES may select one or more EASs based on at least one of the following information: information about the location of the terminal device, terminal device-specific service information, the ECSP policy, and the EAS discovery filter parameter. The filter parameter may include one or more of the application client type, an application server type, and information about a delay requirement of the application client.

S103: The EES sends an EAS discovery response message to the EEC.

In some embodiments, if the EES cannot determine EAS information by using an input in the EAS discovery request message, or the terminal device-specific service information or the ESCP policy on the EES, the EES rejects a service provisioning request and provides a corresponding failure cause.

For example, the terminal device is located outside a geographical or topological service area of the EAS.

In some embodiments, the EES successfully processes the request, and the EAS discovery response message includes discovered EAS information and endpoint information thereof.

Table 4 shows information that may be included in the EAS response message.

**Table 4 Information included in the EAS response message**

| Information element | Status | Description |
|---|---|---|
| Successful response | Optional | Indicates that the EAS discovery request is successful. |
| List of discovered EASs | Optional | List of discovered EASs |
| EAS profile | Mandatory | EAS profile |
| Lifetime | Optional | Time interval or duration in which information elements in the EAS profile are valid and need to be cached in the EEC (for example, a time-to-live value of an EAS endpoint) |
| Failure response | Optional | The EAS discovery request fails. |
| Cause | Optional | Cause of the EAS discovery request failure |

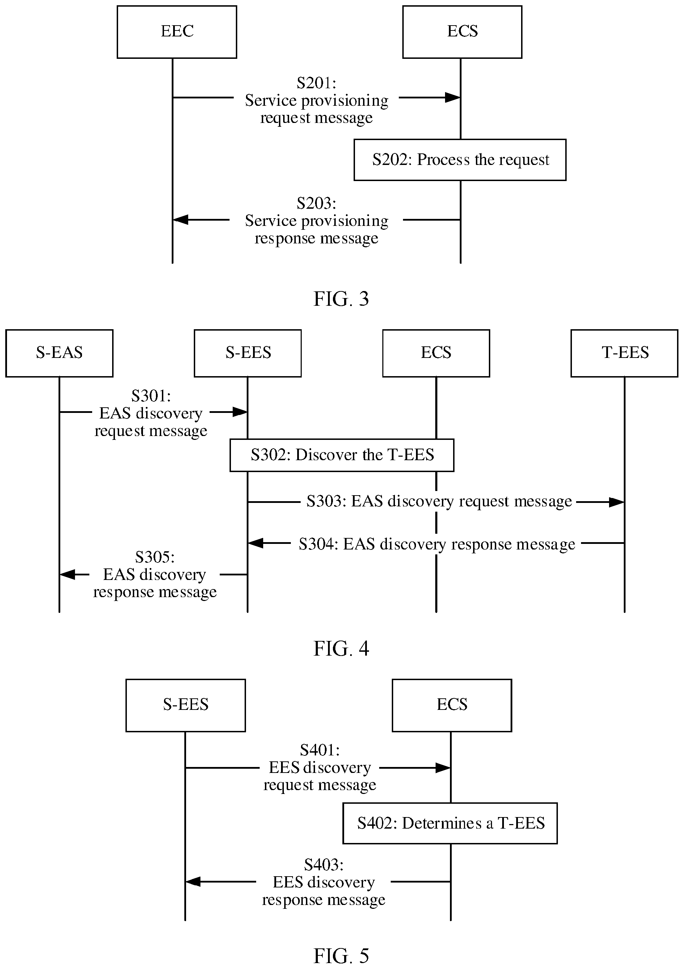

To perform an EAS discovery procedure, an EES needs to be determined first. The EES is determined by using an EES discovery procedure. The following describes the EES discovery procedure with reference to FIG. 3.

Before performing the EES discovery procedure, an ECS configures, based on information such as a location of a terminal device, a service requirement, service preference, and connectivity, available edge computing service information related to an EEC, for the EEC to discover a related available EES.

S201: The EEC sends a service provisioning request (service provisioning request) message to the ECS.

The service provisioning request message is used to request the ECS to trigger EES discovery, and the service provisioning request message includes an identifier of the terminal device, for example, a GPSI, connectivity information, the location of the terminal device, and AC profile (profile) information.

Specifically, Table 5 shows information that may be included in the service provisioning request message.

**Table 5 Information included in the service provisioning request message**

| Information element | Status | Description |
|---|---|---|
| EEC ID | Mandatory | Unique identifier of the EEC |
| Security credential | Mandatory | Security credential generated when an edge computing service is successfully authorized |
| AC profile | Optional | Information about a service that the EEC expects to connect to |
| UE identifier | Optional | Identifier of a UE (for example, a GPSI or an identity token) |
| Connectivity information | Optional | UE connectivity information list, for example, a PLMN ID and a service set identifier (service set identifier, SS ID) |
| UE location | Optional | Location information of the UE |

S202: The ECS processes information of the request.

After receiving the information of the request, the ECS performs authentication and authorization.

S203: The ECS sends a service provisioning response message to the EEC.

In some embodiments, the ECS matches, based on the AC profile and location information of the terminal device that are provided by the EEC, an EES registered with the ECS. If the ECS cannot determine EES information based on the request message of the EEC and the like, the ECS rejects the service provisioning request, and provides a failure cause.

In some embodiments, the ECS successfully processes the service request, and the ECS sends the service provisioning response message to the EEC, and provides EDN connectivity information, a list of EESs that satisfy the information of the request of the EEC, EES address identification information, and the like.

In some embodiments, Table 6 shows information that may be included in the service provisioning response message.

**Table 6 Information included in the service provisioning response message**

| Information element | Status | Description |
|---|---|---|
| Successful response | Optional | Indicates that the service provisioning request is successful. |
| List of EDN configuration information | Mandatory | EDN list |
| EDN connectivity information | Mandatory | Information required for establishing a connection between the UE and an EDN |
| DNN/APN | Mandatory | Data network name/Access point name (access point name) |
| S-NSSAI | Optional | Single network slice selection assistance information (single network slice selection assistance information) |
| EDN topological service area | Optional | Identity list of cells or list of TAIs. The EDN serves UEs that access a core network from the cells |
| List of EESs | Mandatory | EES list of the EDN |
| EES ID | Mandatory | EES identifier |
| EES endpoint | Mandatory | EES endpoint address (for example, a URI and an IP address) |
| EAS ID | Optional | ID of an EAS registered with the EES |
| ECSP information | Optional | Edge computing service provider information |
| EES topological service area | Optional | Identity list of cells or list of TAIs served by the EES. An EEC of a UE, in a cell that is not in the list, connected to the core network does not need to be served by the EES. |
| EES geographical service area | Optional | Area served by the EES in a geographic value |
| List of EES DNAIs | Optional | EES/EAS related DNAI |
| Lifetime | Optional | Duration in which EDN configuration information is valid and needs to be cached in the EEC |
| Failure response | Optional | Indicates that the service provisioning request fails. |
| Cause | Optional | Cause of the service provisioning request failure. |

With reference to FIG. 2 and FIG. 3, the foregoing describes the EAS discovery procedure and the EES discovery procedure initiated by the EEC on a terminal side. With reference to FIG. 4 and FIG. 5, the following describes a target EAS (target EAS, T-EAS) discovery procedure performed by a source EAS (source EAS, S-EAS) or a source EES (source EES, S-EES) on a network side.

FIG. 4 is a diagram of a T-EAS discovery procedure performed by an S-EAS.

S301: An S-EAS sends an EAS discovery request message to an S-EES.

It should be noted that, before sending the EAS discovery request message, the S-EAS has obtained information about the S-EES, for example, address information of the S-EES.

The EAS discovery request message includes an identifier of the EAS and a security credential. The EAS discovery request message may further include an EAS filter parameter that matches an EAS profile. If the S-EAS obtains a target DNAI by using a user plane path management event notification, the EAS discovery request message may further include information about the target DNAI.

S302: The S-EES discovers a T-EES.

After receiving the EAS discovery request message, the S-EES checks whether the S-EAS that sends the request message is authorized to perform a discovery operation. If determining that the S-EAS has been authorized, the S-EES checks whether there is a T-EAS whose EAS information and additional query filter parameter can satisfy the request. If the S-EES discovers the T-EAS, the S-EES sends an EAS discovery response message to the E-EAS, and feeds back information about the T-EAS. If the S-EES does not find the T-EES, the S-EES retrieves the T-EES from an ECS. For a specific procedure, refer to related description shown in FIG. 5.

S303: The S-EES sends the EAS discovery request message to the T-EES.

The EAS discovery request message includes an identifier of the EES and a security credential, and the EAS discovery request message further includes the EAS discovery filter parameter obtained in S301.

S304: The T-EES sends an EAS discovery response message to the S-EES.

After receiving the EAS discovery request message sent by the S-EES, the T-EES performs EAS discovery to obtain one or more T-EASs. The T-EES sends information about the one or more EASs to the S-EES by using the EAS discovery response message.

S305: The S-EES sends the EAS discovery response message to the S-EAS.

The EAS discovery response message is used to send, to the S-EAS, the one or more T-EASs discovered by the T-EES.

Optionally, after receiving the information about the one or more T-EASs, the S-EES may locally store the information about the one or more T-EASs, and then send the information about the one or more T-EASs to the S-EAS.

As shown in FIG. 4, the EAS discovery message sent in the T-EAS discovery process initiated by the S-EES may include a plurality of information elements. For specific content, refer to Table 2. The EAS discovery response message may also include a plurality of information elements. For specific content, refer to Table 4.

FIG. 5 is a diagram of a T-EES discovery process.

S401: An S-EES sends an EES discovery request message to an ECS.

The EES discovery request message may include an identifier of a UE, location information of the UE, an identifier of an EAS, and a target DNAI.

It should be noted that, before sending the EES discovery request message to the ECS, the S-EES has obtained information about the ECS, for example, an address of the ECS. In addition, the S-EES is providing an edge computing service for an application client (application client, AC) on the UE corresponding to the identifier, of the UE, included in the EES discovery request message.

S402: The ECS determines a T-EES.

If the EES discovery request message includes the identifier (for example, a GPSI) of the UE, but the ECS does not locally store the location information of the UE, or the EES discovery request message does not include the location information of the UE, the ECS may interact with a core network to retrieve a location of the UE.

The ECS may determine the T-EES based on one or more of the following information: the identifier of the EAS, the target DNAI, or the location of the UE.

S403: The ECS sends an EES discovery response message to the S-EES.

The EES discovery response message may include an identifier of an S-EAS and information about one or more T-EESs. The information about the one or more T-EESs may be represented in a form of a T-EES list, and the information about the one or more T-ESSs includes information about an endpoint of each T-EES.

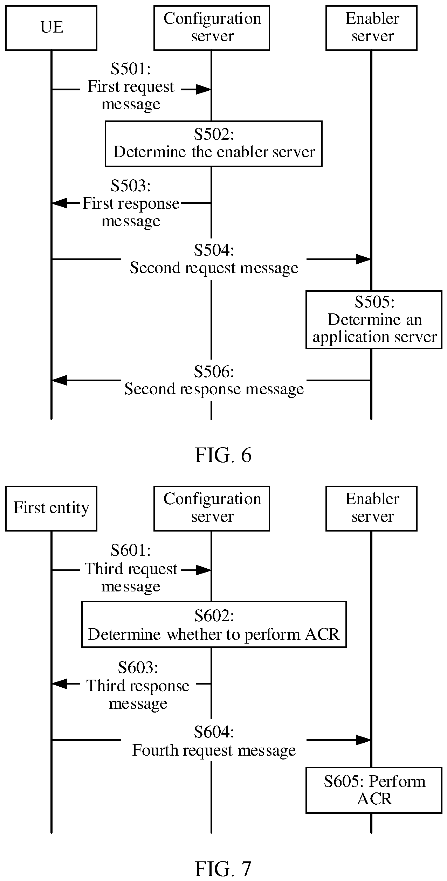

With reference to FIG. 4 and FIG. 5, the foregoing describes the T-EAS discovery procedure performed on the network side. The following describes in detail an application server discovery method provided in this application with reference to FIG. 6 to FIG. 16.

It should be noted that, in the following embodiments, a terminal device group, a terminal device list, a terminal device set, or the like is a terminal device group including a plurality of terminal devices. The terminal device group may be determined by the plurality of terminal devices. For example, a plurality of terminal devices that participate in a conference and that are determined by the plurality of terminal devices participating in the same conference belong to one terminal device group. The terminal device group may alternatively be determined by a network device. For example, the network device randomly divides a plurality of terminal devices participating in a same game into 10 teams, and each team includes at least five terminal devices. The network device considers a plurality of terminal devices in one team as one terminal device group, and the network device also uses a terminal device subsequently joining an existing team in another manner as a terminal device in the terminal device group.

In an SA6 architecture, a user equipment (UE) includes an EEC and an AC. In the following embodiments, a UE may be an EEC or an AC. In other words, the AC and the EEC that are included in the UE are not distinguished and are represented by the UE. In an EAS discovery procedure, after the EEC receives a message sent by an EES, the EEC may send content of the message to an AC, and the AC completes corresponding selection. The AC may alternatively send a request message to the EEC to request to perform EAS discovery. For details, refer to the related description of the embodiment shown in FIG. 2. In an EES discovery procedure, after the EEC receives a message sent by an ECS, the EEC may send content of the message to an AC, and the AC completes corresponding selection. The AC may alternatively send a request message to the EEC to request to perform EES discovery. For details, refer to the related description of the embodiment shown in FIG. 3.

FIG. 6 is a diagram of an application server discovery method according to an embodiment of this application.

S501: A UE sends a first request message to a configuration server, and correspondingly, the configuration server receives the first request message.

The first request message is used to request to discover an enabler server, and the enabler server is configured to serve a plurality of terminal devices.

Specifically, the UE herein is an enabler client of a first terminal device. The first terminal device may include one or more enabler clients, and the first terminal device may further include one or more application clients. Different application clients are configured to obtain different application services.

The configuration server may be an edge configuration server, or another configuration server that may be configured to determine one or more enabler servers for the UE.

In a possible implementation, the first request message includes information about a terminal device group.

In some embodiments, the information about the terminal device group may be used to determine whether a terminal device belongs to the terminal device group or a terminal device list, for example, determine, based on the terminal device list and/or a group identifier in the information about the terminal device group, whether the terminal device belongs to the terminal device group.

In some other embodiments, the information about the terminal device group may be used to determine the enabler server, for example, determine the enabler server based on location information and/or a service identifier in the information about the terminal device group.

In another possible implementation, the first request message includes first discovery information and/or second discovery information, where the first discovery information indicates to discover the enabler server for the plurality of terminal devices, and the second discovery information indicates a service range expected by the plurality of terminal devices.

The service range expected by the plurality of terminal devices herein may be a service range that is determined by each terminal device and that is applicable to the terminal device; or may be a service range that is determined by a network side device and that is applicable to the plurality of terminal devices, for example, a service range that is determined by a login server based on locations of the terminal devices and that is applicable to the plurality of terminal devices. Optionally, the first request message includes information about a quantity of terminal devices included in the terminal device group. After obtaining the information about the quantity of terminal devices included in the terminal device group, the configuration server may determine, by using the information, whether first request messages sent by all the terminal devices in the terminal device group are received.

It should be noted that, for a 1^{st} terminal device, in the terminal device group, that requests to discover the enabler server, when the first request message sent by the terminal device includes the information about the terminal device group and the configuration server does not locally store the information about the terminal device group, the configuration server stores the information about the terminal device group.

S502: The configuration server determines the enabler server.

Specifically, the configuration server determines the enabler server based on the information about the terminal device group, where the terminal device group includes the plurality of terminal devices.

In a possible implementation, the information about the terminal device group includes the terminal device list and/or the group identifier, the terminal device list includes device identifiers of the plurality of terminal devices, and the group identifier identifies the terminal device group.

In another possible implementation, the information about the terminal device group further includes the location information and/or the service identifier, where the location information is location information of the plurality of terminal devices, and the service identifier identifies a service that needs to be obtained by the plurality of terminal devices.

Optionally, the configuration server determines the enabler server based on the first discovery information and/or the second discovery information.

When the first request message includes the information about the quantity of terminal devices included in the terminal device group, the configuration server may alternatively determine the enabler server in the following manners:

If the configuration server may receive, within a preset time range, the first request messages sent by all the terminal devices in the terminal device group, the configuration server may determine the enabler server based on information about all the terminal devices in the group (for example, the location information of the terminal devices).

If the configuration server does not receive, within the preset time range, the first request messages sent by all the terminal devices in the terminal device group, the configuration server may determine an enabler server based on information about a terminal device that has sent the first request message, and associate information about the enabler server with the terminal device list and/or the group identifier. When a terminal device in the same terminal device list or having the same group identifier subsequently requests to discover the enabler server, the configuration server may send the stored information about the enabler server to the subsequent terminal device.

In an embodiment, after an ECS receives a service provisioning request message of a 1^{st} UE, in a UE list, that requests to discover an EES, the ECS determines, based on an expected service range included in the service provisioning request message, the EES for the 1^{st} UE that requests to discover the EES, and uses the EES as an EES that serves UEs in the UE list, to send information about the EES to another UE in the UE list.

S503: The configuration server sends a first response message to the UE, and correspondingly, the UE receives the first response message.

The first response message includes information about the enabler server.

In a possible implementation, the first response message further includes first reporting indication information, and the first reporting indication information indicates to send the information about the enabler server to the configuration server.

In another possible implementation, the first response message further includes second reporting indication information, the second reporting indication information indicates to send information about an application server to the enabler server, and the application server is configured to provide an application service for the plurality of terminal devices.

It should be noted that the first reporting indication information and the second reporting indication information may be separately included in two different information elements, or may be included in a same information element.

For example, a value of an information element "reporting indication" may be 00, 01, 10, or 11. When the value is 00, it indicates that the reporting indication information is empty, that is, no reporting indication is included; when the value is 01, it indicates that the selected enabler server needs to be sent to the configuration server (that is, the meaning of the first reporting indication information); when the value is 10, it indicates that the selected application server needs to be sent to the enabler server (that is, the meaning of the second reporting indication information); and when the value is 11, it indicates that the selected enabler server needs to be sent to the configuration server and the selected application server needs to be sent to the enabler server (including both the meanings of the first reporting indication and the second reporting indication).

In a possible implementation, the configuration server may further send selection indication information to the enabler server, where the selection indication information indicates the enabler server to select a same application server for the plurality of terminal devices.

Optionally, the first response message may further include the information about the quantity of terminal devices included in the terminal device group.

S504: The UE sends a second request message to the enabler server, and correspondingly, the enabler server receives the second request message.

The second request message is used to request to discover an application server, and the application server is configured to provide an application service for the plurality of terminal devices.

In a possible implementation, the second request message includes the information about the terminal device group.

In some embodiments, the information about the terminal device group may be used to determine whether a terminal device belongs to the terminal device group or the terminal device list, for example, determine, based on the terminal device list and/or the group identifier in the information about the terminal device group, whether the terminal device belongs to the terminal device group.

In some other embodiments, the information about the terminal device group may be used to determine the application server, for example, determine the enabler server based on location information and/or a service identifier in the information about the terminal device group.

In another possible implementation, the second request message includes third discovery information and/or fourth discovery information, the third discovery information indicates to discover the application server for the plurality of terminal devices, and the fourth discovery information indicates an application service range expected by the plurality of terminal devices. Optionally, the second request message includes the information about the quantity of terminal devices included in the terminal device group. After obtaining the information about the quantity of terminal devices included in the terminal device group, the enabler server may determine, by using the information, whether second request messages sent by all the terminal devices in the terminal device group are received.

It should be noted that, for a 1^{st} terminal device, in the terminal device group, that requests to discover the application server, when the second request message sent by the terminal device includes the information about the terminal device group and the enabler server does not locally store the information about the terminal device group, the enabler server stores the information about the terminal device group.

S505: The enabler server determines the application server.

Specifically, the enabler server determines the application server based on the information about the terminal device group, where the terminal device group includes the plurality of terminal devices.

In a possible implementation, the information about the terminal device group includes the terminal device list and/or the group identifier, the terminal device list includes device identifiers of the plurality of terminal devices, and the group identifier identifies the terminal device group.

In another possible implementation, the information about the terminal device group further includes the location information and/or the service identifier, where the location information is the location information of the plurality of terminal devices, and the service identifier identifies the service that needs to be obtained by the plurality of terminal devices.

Optionally, the enabler server determines the application server based on the third discovery information and/or the fourth discovery information.

When the second request message includes the information about the quantity of terminal devices included in the terminal device group, the enabler server may alternatively determine the application server in the following manners.

If the enabler server may receive, within a preset time range, the second request messages sent by all the terminal devices in the terminal device group, the enabler server may determine the application server based on information about all the terminal devices in the group (for example, the location information of the terminal devices).

If the enabler server does not receive, within the preset time range, the second request messages sent by all the terminal devices in the terminal device group, the enabler server may determine an application server based on information about a terminal device that has sent the second request message, and associate information about the application server with the terminal device list and/or the group identifier. When a terminal device in the same terminal device list or having the same group identifier subsequently requests to discover the application server, the enabler server may send the stored information about the application server to the subsequent terminal device.

In an embodiment, after an EES receives a service provisioning request message of a 1^{st} UE, in a UE list, that requests to discover an EAS, the EES determines, based on an expected service range included in the service provisioning request message, the EAS for the 1^{st} UE that requests to discover the EAS, and uses the EAS as an EAS that serves UEs in the UE list, to send information about the EAS to another UE in the UE list.

S506: The enabler server sends a second response message to the UE, and correspondingly, the UE receives the second response message.

The second response message includes information about the application server.

In a possible implementation, the second response message further includes second reporting indication information, and the second reporting indication information indicates to send the information about the application server to the enabler server.

Optionally, the second response message may further include the information about the quantity of terminal devices included in the terminal device group.

In this embodiment of this application, in comparison with a method for determining one enabler server based on information about one terminal device, that the configuration server determines the enabler server for the plurality of terminal devices in the terminal device group based on the information about the terminal device group helps determine, for the plurality of terminal devices, the enabler server applicable to the plurality of terminal devices. In comparison with a method for determining one application server based on information about one terminal device, that the application server determines the application server for the plurality of terminal devices in the terminal devices based on the information about the terminal device group helps determine, for the plurality of terminal devices, the application server applicable to the plurality of terminal devices, and helps the plurality of terminal devices obtain same application experience when obtaining the same application service.

FIG. 7 is a diagram of an application server discovery method according to an embodiment of this application.

S601: A first entity sends a third request message to a configuration server, and correspondingly, the configuration server receives the third request message.

The first entity may be an enabler client or a source enabler server of a first terminal device.

The third request message is used to request to discover a target enabler server, and the target enabler server is configured to serve a plurality of terminal devices after application context relocation. Specifically, the third request message herein is specifically used to request to discover the target enabler server for a terminal device in a terminal device group or for all terminal devices in the terminal device group.

In a possible implementation, the third request message may include information about the terminal device group.

In some embodiments, the information about the terminal device group may be used to determine whether a terminal device belongs to the terminal device group or a terminal device list, for example, determine, based on the terminal device list and/or a group identifier in the information about the terminal device group, whether the terminal device belongs to the terminal device group.

In some other embodiments, the information about the terminal device group may be used to determine an enabler server, for example, determine the enabler server based on location information in the information about the terminal device group.

Optionally, the third request message may further include information about a quantity of terminal devices included in the terminal device group, and the configuration server may determine, based on the information about the quantity of terminal devices included in the terminal device group, whether request messages corresponding to all the terminal devices in the terminal device group are received.

It should be noted that, for a 1^{st} terminal device, in the terminal device group, that requests to discover the enabler server, when the first request message sent by the terminal device includes the information about the terminal device group and the configuration server does not locally store the information about the terminal device group, the configuration server stores the information about the terminal device group.

S602: The configuration server determines whether to perform ACR.

Specifically, the configuration server determines, based on the information about the terminal device group, whether to perform application context relocation for the plurality of terminal devices.

In a possible implementation, the information about the terminal device group includes the terminal device list and/or the group identifier, the terminal device list includes device identifiers of the plurality of terminal devices, and the group identifier identifies the terminal device group.

In another possible implementation, the information about the terminal device group further includes the location information, and the location information is location information of the plurality of terminal devices. The configuration server combines location information of a current location of the first terminal device and the location information of the plurality of terminal devices.

S603: The configuration server sends a third response message to the first entity, and correspondingly, the first entity receives the third response message.

The third response message indicates whether to perform application context relocation for the plurality of terminal devices in the terminal device group, the plurality of terminal devices include the first terminal device, and the source enabler server is configured to serve the plurality of terminal devices before application context relocation or currently.

In a possible implementation, when the configuration server determines to perform application context relocation for the plurality of terminal devices, the third response message includes information about the target enabler server, and the target enabler server is configured to serve the plurality of terminal devices after application context relocation; and the third response message further includes the group identifier and the terminal device list, the group identifier identifies the terminal device group including the plurality of terminal devices, and the terminal device list includes the device identifiers of the plurality of terminal devices.

S604: The first entity sends a fourth request message to the enabler server, and correspondingly, the enabler server receives the fourth request message.

The fourth request message includes the terminal device list and/or the group identifier, the terminal device list includes the device identifiers of the plurality of terminal devices, the group identifier identifies the terminal device group including the plurality of terminal devices, and the fourth request message is used to request to perform application context relocation for the plurality of terminal devices.

Optionally, the fourth request message may further include the information about the quantity of terminal devices included in the terminal device group, and the enabler server may determine, based on the information about the quantity of terminal devices included in the terminal device group, whether request messages corresponding to all the terminal devices in the terminal device group is received.

For a 1^{st} terminal device, in the terminal device group, that requests to discover an application server, when the fourth request message sent by the terminal device includes the information about the terminal device group (for example, the terminal device list and/or the group identifier) and the enabler server does not locally store the information about the terminal device group, the enabler server stores the information about the terminal device group.

S605: The enabler server performs ACR.

In a possible implementation, the enabler server sends a first notification message to the application server, where the first notification information includes the terminal device list, and the first notification message notifies the application server to perform application context relocation for the plurality of terminal devices.

When the application server is a source edge application server, after receiving the first notification message, the source edge application server sends application contexts of the plurality of terminal devices to a target edge application server. When the application server is a target edge application server, after receiving the first notification message, the target edge application server requests a source edge application server to send application contexts of the plurality of terminal devices to the target edge application server.

In another possible implementation, the enabler server sends a second notification message to the plurality of terminal devices, where the second notification message includes the information about the target enabler server and information about a target application server, the target enabler server is configured to serve the plurality of terminal devices after application context relocation, and the target application server is configured to provide an application service for the plurality of terminal devices after application context relocation.

In this embodiment of this application, the configuration server may determine, based on the information about the terminal device group, whether to perform ACR for the plurality of terminal devices, and determine the same enabler server for the plurality of terminal devices. The enabler server may determine the target application server for the plurality of terminal devices with reference to the location information of the plurality of terminal devices and the like. In a process of determining whether to perform ACR and determining the target application server, states and information of the plurality of terminal devices are considered in combination. This helps reduce adverse impact of the ACR event on application service experience of the terminal devices, and helps provide same application service experience for the plurality of terminal devices.

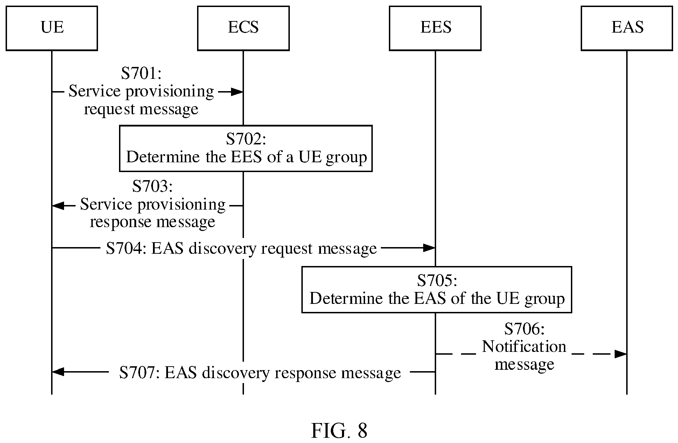

FIG. 8 is a diagram of a process in which a terminal device initiates allocation of a same EES and a same EAS to a plurality of UEs in a terminal device group (UE group) or a terminal device list (UE list). For ease of description, in the following description, a selected EES (selected EES) represents the same EES, and a selected EAS (selected EAS) represents the same EAS. The selected EES or the selected EAS may alternatively have another name. This is not limited in this embodiment of this application.

S701: A UE sends a service provisioning request message to an ECS.

Specifically, an AC of the UE requests an edge computing service from an EEC through an EDGE-5 interface, and requests to discover an EAS and obtain information such as an address of the EAS. After receiving a request message sent by the AC, the EEC of the UE sends the service provisioning request message to the ECS.

Optionally, the request message sent by the AC to the EEC may further include one or more of the following:
a UE list, an expected service range (required service area), or indication information, where the UE list includes device identifiers of a plurality of terminal devices, the expected service range is an expected application service range determined based on location information of the UE, and the indication information indicates the ECS to select a same EES for UEs in a UE group; or the indication information may indicate an EES to select a same EAS for UEs in a UE group.

Specifically, the expected service range may be a level of an EES or EAS service range (for example, a district-level or city-level EES), or may be a specific geographical service range (for example, the service range is an EAS in Beijing).

The service provisioning request message is used to request the ECS to discover the EES. The service provisioning request message may also be referred to as an edge platform discovery request message or may have another name. This is not limited in this application.

The service request message may include identification information of the UE, the location information of the UE, and the like. The service provisioning request message may further include other information. For details, refer to the related description in S201.

In some embodiments, before the UE sends the service provisioning request message to the ECS, the ECS has obtained the UE list. The UE list includes identification (identification, ID) information of one or more UEs. The identification information of the one or more UEs may be a subscription permanent identifier (subscription permanent identifier, SUPI) or a generic public subscription identifier (GPSI) of the UE, or other information that can identify an identity of the UE.

The ECS may obtain the UE list in a plurality of manners. For example, the ECS obtains the UE list from a login server (login server), where the login server is a server connected when the AC of the UE performs a user login operation.

The login server may determine the UE list in a plurality of manners. For example, the login server uses UEs that log in to the server within a same time period as one group of UEs, and the group of UEs corresponds to one UE list.

Optionally, the ECS determines all UEs included in the UE list as one group of UEs, and determines a group identifier (group identification, group ID or GID) for the group of UEs. The group identifier may identify the UEs in the UE group. Alternatively, the group identifier may be obtained by the ECS from another network element.

In some other embodiments, the service provisioning request message includes the UE list.

Specifically, a service provisioning request message sent by an EEC of one or more UEs in the UE list includes list information of the UEs.

In some still other embodiments, the service provisioning request message further includes a group identifier of the UE group and information about a quantity of UEs included in the UE group.

Specifically, a service request message sent by an EEC of one or more UEs in the UE group includes the group identifier of the UE group and the information about the quantity of UEs included in the UE group, and a service provisioning request message sent by another UE included in the UE group includes the group identifier of the UE group.

Optionally, the service provisioning request message may further include first discovery information and/or second discovery information, where the first discovery information indicates to discover an enabler server for the plurality of terminal devices, and the second discovery information indicates a service range expected by the plurality of terminal devices.

S702: The ECS determines a selected EES.

Specifically, the ECS selects the same EES for all the UEs in the UE list. Alternatively, the ECS selects the same EES for the UEs having the same group identifier.

The UE list may be obtained by the ECS from the received service request message, or the UE list may be obtained in another manner, for example, obtained from the login server of the UE.

In some embodiments, the service provisioning request message received by the ECS includes a group identifier of a UE group or a UE list, and the ECS determines, based on the group identifier of the UE group or the UE list, that the UE is included in the UE group or the UE list, so that the ECS determines that a same EES needs to be determined for a plurality of UEs in the UE list.

In some other embodiments, the service provisioning request message that is of the UE and that is received by the ECS does not include an identifier of a UE group or a UE list, and the ECS determines, based on an identifier of the UE and the UE list that is obtained in another manner, that the UE belongs to UEs in the UE list, so that the ECS determines that a same EES needs to be determined for the UE and another UE in the UE list.

The ECS may determine the selected EES in any one of the following manners.

In some embodiments, after the ECS determines that service provisioning request messages sent by all UEs (exactly, EECs of the UEs) in a UE list or a UE group are received, the ECS selects a same EES for all the UEs in the UE list or the UE group as a selected EES with reference to information (such as location information) of all the UEs.

In some other embodiments, after the ECS receives a service provisioning request message sent by one or more UEs in a UE list or a UE group, the ECS selects one EES as a selected EES based on location information of the one or more UEs and the like. When receiving a service provisioning request message sent by another UE in the UE list, the ECS sends information about the selected EES to the another UE.

In an embodiment, after the ECS receives a service provisioning request message of a 1^{st} UE, in a UE list, that requests to discover an EES, the ECS determines, based on an expected service range included in the service provisioning request message, the EES for the 1^{st} UE that requests to discover the EES, and uses the EES as an EES that serves UEs in the UE list, to send information about the EES to another UE in the UE list.

In some still other embodiments, the ECS receives a service provisioning request message sent by a UE 1, where the service provisioning request message does not include a UE list or a group identifier of a UE group. The ECS performs a conventional EES discovery procedure, and the UE 1 selects a first EES to obtain a service. The ECS receives a service provisioning request message sent by a UE 2, where the service provisioning request message includes a UE list, and the ECS determines, based on the UE list, that the UE 1 and the UE 2 belong to UEs in the same UE list or UEs in a same UE group. The ECS uses the first EES selected by the UE 1 as a selected EES, and sends information about the selected EES to the UE 2.

When the service provisioning request message includes the first discovery information, after receiving the first discovery information, the ECS may determine that the same EES needs to be determined for the plurality of terminal devices in the UE list or the UE group. The first discovery information may be an explicit indication, to be specific, directly indicate the EES that needs to be discovered to serve the plurality of terminal devices. The first discovery information may alternatively be an implicit indication. For example, the first discovery information is the UE list or the group identifier of the UE group. After receiving the service provisioning request message, the ECS may also identify that the EES that is requested to be discovered is configured to serve the plurality of terminal devices.

When the service provisioning request message includes the second discovery information, after receiving the second discovery information, the ECS may determine a range that needs to be served by the plurality of terminal devices.

In some embodiments, the second discovery information is a service range that is determined by each UE and that is expected by the UE. In this case, after receiving the second discovery information sent by all the UEs in the UE group, the ECS may determine, for the plurality of UEs based on the service ranges respectively expected by the plurality of UEs, one EES that is required by the service ranges applicable to all the UEs.

In some other embodiments, the second discovery information is a service range that is applicable to all the UEs and that is determined by the login server for all the UEs in the UE group. After receiving the second discovery information, the ECS may determine a corresponding EES based on the service range applicable to all the UEs.

The ECS may select an EES with an optimal location as the selected EES with reference to a location of the UE in the UE list or the UE group and a deployment location of the EES. For a method for selecting the EES by the ECS, refer to a related standard. Details are not described herein.

S703: The ECS sends a service provisioning response message to the UE.

The service provisioning response message may also be referred to as an edge platform discovery response message or may have another name. This is not limited in this application. The service provisioning response message includes information about one or more EESs, and the one or more EESs may include the EES selected in S702.

In some embodiments, when the service provisioning request message sent by the UE (precisely, the EEC of the UE) in S701 does not include the UE list or the UE group identifier, in other words, the UE does not obtain the UE list or the group identifier of the UE group in S701, the service provisioning response message may include the group identifier of the UE group, in other words, the ECS may send the group identifier to the UE by using the service provisioning response message. Optionally, the service provisioning response message may further include the information about the quantity of UEs included in the UE group.

Specifically, the ECS sends the group identifier to the EECs of all the UEs in the UE group, and sends the quantity of UEs in the UE group to an EEC of one or more UEs in the UE group.

In some other embodiments, when the service provisioning request message sent by the UE in S701 does not include the UE list or the UE group identifier, the service provisioning response message may further include UE list information.

Specifically, the ECS sends the UE list information to an EEC of one or more UEs in the UE list.

In some still other embodiments, when the service provisioning request message sent by the UE (specifically, the EEC of the UE) in S701 does not include the UE list or the UE group identifier, the service provisioning response message may include the group identifier, the quantity of UEs in the UE group, and the UE list.

Optionally, the service provisioning response message may further include indication information, where the indication information indicates the EEC or the AC to select the selected EES.

Specifically, after obtaining the indication information, the EEC may further send the indication information to the AC, and the AC selects the selected EES. Alternatively, after obtaining the indication information, the EEC selects the selected EES, and sends information about the selected EES to the AC.

Optionally, the service provisioning response message may further include other information. For details, refer to the related description in S203.

It should be noted that, in the embodiment shown in FIG. 8, the process of S701 to S703 is to discover the EES that can serve the UE. If the EES has been obtained, S701 to S703 may not be performed, in other words, the process of S701 to S703 is optional.

S704: The UE sends an EAS discovery request message to the EES.

After receiving the service provisioning response message sent by the ECS, the UE determines an EES based on the information about the one or more EESs included in the service provisioning response message, and requests the EES to perform EAS discovery, where the EES may be the EES selected in S703.

Specifically, in some embodiments, when the service provisioning response message includes information about a plurality of EESs, the EEC may select one EES from the plurality of EESs as the selected EES. Alternatively, the EES may directly select the selected EES in S702 based on the indication information included in the service provisioning response message. Alternatively, after receiving the service provisioning response message, the EEC sends information about a plurality of EESs to the AC, and the AC selects one EES from the plurality of EESs as a selected EES. Alternatively, the EEC sends the indication information included in the service provisioning response message to the AC, and the AC directly selects the selected EES based on the indication information.

In some other embodiments, when the service provisioning response message includes only the information about the selected EES, the EEC or the AC directly determines the selected EES as an EES that is to provide a service.

After determining one EES, the AC of the UE sends a request message to the EEC to request to perform EAS discovery. After receiving the request message sent by the AC, the EEC sends the EAS discovery request message to the EES.

Optionally, the request message sent by the AC to the EEC may further include one or more of the following:
the UE list, the expected service range, or the indication information, where the UE list includes the device identifiers of the plurality of terminal devices, the expected service range is the expected application service range determined based on the location information of the UE, and the indication information indicates the ECS to select the same EES for the UEs in the UE group; or the indication information may indicate the EES to select the same EAS for the UEs in the UE group.

Specifically, the expected service range may be a level of an EES or EAS service range (for example, a district-level or city-level EES), or may be a specific geographical service range (for example, the service range is an EAS in Beijing).

In some embodiments, the EAS discovery request message includes the group identifier of the UE group and the quantity of UEs in the UE group.

Specifically, an EEC of at least one UE in the UE group sends the group identifier of the UE group and the quantity of UEs included in the UE group to the selected EES, and an EEC of another UE in the UE group sends the group identifier to the selected EES.

In some other embodiments, the EAS discovery request message includes the UE list information.

Specifically, an EEC of one or more UEs in the UE list sends the UE list to the selected EES.

In some still other embodiments, an EEC of one or more UEs in the UE list sends the group identifier of the UE group, the quantity of UEs in the UE group, and the UE list to the selected EES.

Optionally, the EAS discovery request message further includes indication information, and the indication information indicates the EES to select the same EAS for the plurality of UEs in the UE list or the UE group.

Optionally, the EAS discovery request message may further include third discovery information and/or fourth discovery information, where the third discovery information indicates to discover an application server for the plurality of terminal devices, and the fourth discovery information indicates an application service range expected by the plurality of terminal devices.

S705: The EES determines an EAS.

Specifically, after receiving the EAS discovery request message, the selected EES selects the same EAS for all the UEs in the UE list. Alternatively, the EES selects the same EAS for UEs having a same group identifier. The following uses a selected EAS (selected EAS) to represent the same EAS.

In some embodiments, when receiving the EAS discovery request message sent by the EEC, the EES determines, based on the identifier of the UE, whether the UE belongs to the UEs in the UE list.

Alternatively, the EES determines, depending on whether the group identifier of the UE in the EAS discovery request message sent by the UE is consistent with a group identifier that is of the UE and that is locally stored in the EES, whether the UE belongs to the UEs in the UE group.

After the EES determines that EAS discovery request messages sent by all UEs corresponding to UE identifiers included in a UE list are received, the EES selects a same EAS for all the UEs in the UE list or the UE group as the selected EAS.

Alternatively, the EES records a quantity of received EAS discovery request messages for a same group identifier of UEs and different UE identifiers, to determine whether EAS discovery request messages sent by all UEs in a UE group are received. After determining that the EAS discovery request messages sent by all the UEs in the UE group are received, the EES selects a same EAS for all the UEs in the UE list or the UE group as the selected EAS.

In some other embodiments, after the EES receives EAS discovery request messages sent by one or more UEs in the UE list or the UE group, the EES selects an EAS as the selected EAS based on location information of the one or more UEs. When receiving an EAS discovery request message sent by another UE in the UE list or the UE group, the EES determines, based on the UE list or the group identifier of the UE group, whether the UE belongs to the same UE list or the same UE group as the one or more UEs that have selected the EAS. When the UE belongs to the same UE list or the same UE group, information about the selected EAS is sent to the UE.

In an embodiment, after an EES receives a service provisioning request message of a 1^{st} UE, in a UE list, that requests to discover an EAS, the EES determines, based on an expected service range included in the service provisioning request message, the EAS for the 1^{st} UE that requests to discover the EAS, and uses the EAS as an EAS that serves UEs in the UE list, to send information about the EAS to another UE in the UE list.

In some other embodiments, the EES receives an EAS discovery request message sent by a UE 1, where the EAS discovery request message does not include a UE list or a group identifier of a UE group. The EES performs a conventional EAS discovery procedure, and the UE 1 selects a first EAS. The EES receives an EAS discovery request message sent by a UE 2, where the EAS discovery request message includes a UE list, and the EES determines, based on the UE list, that the UE 1 and the UE 2 belong to UEs in the same UE list or UEs in a same UE group. The EES uses the first EAS selected by the UE 1 as a selected EAS, and sends information about the first EAS to the UE 2.

When the EAS discovery request message includes the third discovery information, after receiving the third discovery information, the EES may determine that the same EAS needs to be determined for the plurality of terminal devices in the UE list or the UE group. The third discovery information may be an explicit indication, to be specific, directly indicate the EAS that needs to be discovered to serve the plurality of terminal devices. The third discovery information may alternatively be an implicit indication. For example, the third discovery information is the UE list or the group identifier of the UE group. After receiving the EAS discovery request message, the EES may also identify that the EAS that is requested to be discovered is configured to serve the plurality of terminal devices.

When the EAS discovery request message includes the fourth discovery information, after receiving the fourth discovery information, the ECS may determine a range that needs to be served by the plurality of terminal devices.

In some embodiments, the fourth discovery information is an application service range that is determined by each UE and that is expected by the UE. In this case, after receiving the fourth discovery information sent by all the UEs in the UE group, the EES may determine, for the plurality of UEs based on the service ranges respectively expected by the plurality of UEs, one EAS that is required by the service ranges applicable to all the UEs.

In some other embodiments, the fourth discovery information is an application service range that is applicable to all the UEs and that is determined by the login server for all the UEs in the UE group. After receiving the fourth discovery information, the EES may determine a corresponding EAS based on the application service range applicable to all the UEs.

The EES may select an EAS with an optimal location with reference to locations of the plurality of UEs in the UE list or the UE group and a deployment location of the EAS. For a method for selecting the EAS by the EES, refer to a related standard. Details are not described herein again.

S706: Optionally, the selected EES sends a notification message to the selected EAS.

Specifically, the selected EES sends the group identifier of the UE group and the information about the quantity of UEs in the UE group to the selected EAS. Alternatively, the selected EES sends the UE list to the selected EAS.

The selected EAS obtains the group identifier of the UE group or the UE list. When the UE accesses the selected EAS, the selected EAS may determine, based on the identification information of the UE, whether the UE belongs to the UE group or the UE list, to determine whether a corresponding application service needs to be provided for the UE.

S707: The selected EES sends an EAS discovery response message to the UE.

Specifically, the selected EES sends the information about the selected EAS to the EEC of the UE.

In some embodiments, the selected EES may further send the group identifier of the UE group to the EEC. Optionally, the EES may further send the quantity of UEs in the UE group to the EEC.

In some other embodiments, the selected EES may further send the UE list to the EEC.

In some other embodiments, the selected EES may further send the group identifier and the UE list to the EEC. Optionally, the EES may further send the quantity of UEs in the UE group to the EEC.

After obtaining information such as the information about the selected EAS, the EEC sends the information about the selected EAS to the AC of the UE. After obtaining the information about the selected EAS, the AC may connect to the selected EAS and request the selected EAS to provide the application service.

Before EES discovery and EAS discovery are performed for a terminal device by using the UE list and the group identifier of the UE group, an identity of the terminal device is confirmed, to determine whether the terminal device belongs to the UE list or the UE group. This helps improve efficiency of determining one EES and one EAS for the plurality of terminal devices by the ECS and the EES, and helps the plurality of terminal devices in the UE list or the UE group obtain same application service experience.

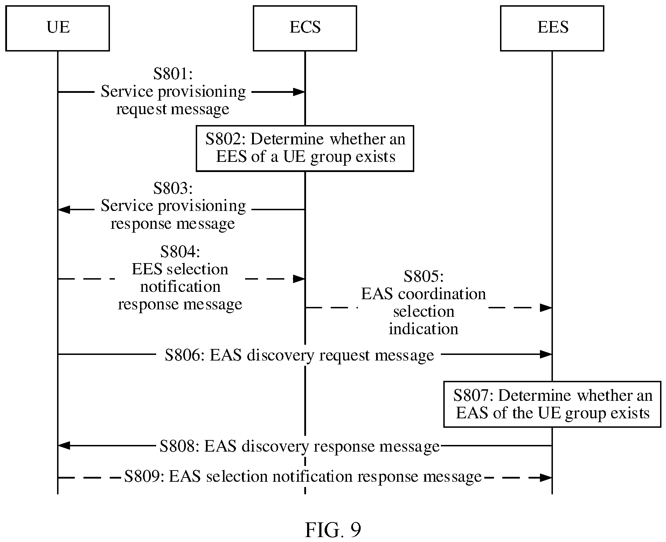

With reference to FIG. 8, the foregoing describes a process in which the ECS and the EES determine, by using the UE list or the group identifier of the UE group, to select the same EAS for all the UEs in the UE group. With reference to FIG. 9, the following describes a process in which an ECS and an EES determine, by using a UE list and an identifier of a service that needs to be obtained by a UE, to select a same EES and a same EAS for all UEs in the UE list. For ease of description, in the following description, a selected EES represents the same EES, and a selected EAS represents the same EAS.

First, a process in which the ECS determines the same EES (selected EES) based on the UE list and the identifier of the service that needs to be obtained by the UE is described.

In this embodiment of this application, before the UE sends a service provisioning request message to the ECS, the ECS has obtained a UE list, a UE set, or a group identifier of a UE group that includes the UE, and a service identifier of a service (referred to as a target service below) that needs to be obtained by the UE in the UE list, the UE set, or the UE group. It should be understood that the group identifier of the UE group may be a set of identifiers of all UEs in the UE list/UE set/UE group, or may be an identifier of the UE list/UE set/UE group.

The UE list includes identification information of one or more UEs. The identification information of the one or more UEs may be an SUPI or a GPSI of the UE, or other information that can identify an identity of the UE.

The target service is a service that needs to be obtained by the UE included in the UE list, in other words, a service that needs to perform coordinated access. The service identifier of the target service indicates the target service.

The identifier of the target service may be identified in a plurality of manners, for example, identified by using an edge application server service identifier, a fully qualified domain name (full qualified domain name, FQDN), or an application identifier (application ID, App ID); or may be identified by using another information element identifier for service identification. It should be noted that an EAS ID is an identifier of a service provided by the EAS, but not an identifier of a specific EAS instance or some specific EAS instances. The identifier may be an edge application server identifier (EAS ID), or may be another identifier that has a same function.

The ECS may determine the UE list and the service identifier of the target service in a plurality of manners. This is not limited in this application.

For example, when an online conference App is used to schedule an online conference, a server of the App obtains an identifier of a participant UE, and identifiers of all participant UEs form a UE list. The server of the App may send the UE list and a service identifier identifying a conference application service to the ECS.

Optionally, the ECS may perform mutual conversion between different types of service identifiers. For example, the ECS may convert an FQDN into an EAS ID.

S801: A UE sends a service provisioning request message to an ECS.

Specifically, an AC of the UE requests an edge computing service from an EEC through an EDGE-5 interface, and requests to discover an EAS and obtain information such as an address of the EAS. After receiving a request message sent by the AC, an EEC of the UE sends the service provisioning request message to the ECS.

The service provisioning request message is used to request the ECS to discover an EES. The service provisioning request message may also be referred to as an edge platform discovery request message or may have another name. This is not limited in this application.

The service provisioning request message may include an identifier of the UE and a service identifier of an expected service, where the expected service is a service that needs to be obtained by the UE.

S802: The ECS determines whether a selected EES exists.

After the ECS receives the service provisioning request message sent by the UE, the ECS obtains the identifier of the UE and the service identifier of the expected service.

The ECS determines, based on the identifier of the UE, whether the UE is included in a UE list. The ECS determines, based on the service identifier, whether the service identifier of the expected service of the UE is consistent with a service identifier of a target service corresponding to the UE list.

In some embodiments, the ECS determines that the UE is in the UE list, and the service identifier of the expected service is consistent with the service identifier of the target service corresponding to the UE list. If ECS finds that a selected EES that provides the target service has been allocated to the UE in the UE list, the ECS obtains information about the selected EES. The foregoing action may also be described as follows: The ECS determines the EES corresponding to the UE list and the target service.

In some other embodiments, the ECS determines that the UE is in the UE list, and the service identifier of the expected service is consistent with the service identifier of the target service corresponding to the UE list. If the ECS finds that no selected EES that provides the target service is allocated to the UE in the UE list; or the ECS cannot determine an EES corresponding to the UE list and the target service, the ECS performs a conventional EES discovery procedure to obtain information about one or more EESs that can provide the target service for the UE in the UE list. The one or more EESs may be referred to as candidate EESs.

S803: The ECS sends a service provisioning response message to the EEC.

The service provisioning response message may also be referred to as an edge platform discovery response message, or may have another name. This is not limited in this application. The service provisioning response message may include information about one or more EESs, and the one or more EESs may include the selected EES.

The information about the one or more EESs may be represented in a form of an EES list.

In some embodiments, if the ECS obtains the information about the selected EES, the service provisioning response message includes the information about the selected EES.

Optionally, the service provisioning response message may further include information about the candidate EESs and indication information, where the indication information indicates to select the selected EES, and a candidate EAS may be used as a standby EAS.

In some other embodiments, if the ECS obtains information about the candidate EESs, the information about the one or more EESs included in the service provisioning response message is the information about the candidate EESs.

In this case, the service provisioning response message may further include first indication information, where the first indication information indicates the UE to report information about an EES selected from the candidate EESs to the ECS.

Alternatively, the service provisioning response message further includes second indication information, where the second indication information indicates the UE to report information about an EES selected from the candidate EESs to the ECS, and the second indication information further indicates the UE to report information about an EAS selected from candidate EASs to the EES.

Optionally, the service provisioning response message may further include the UE list, where the UE list may indicate the UE to report the information about the EES selected from the candidate EESs to the ECS, and the UE list may further indicate the UE to report the information about the EAS selected from the candidate EASs to the EES.

S804: The UE sends an EES selection notification response message to the ECS.

The EES selection notification response message includes the identifier of the UE and the information about the selected EES, for example, an identifier and/or an address of the selected EES.

After receiving the service provisioning response message, the UE obtains the information, about the candidate EESs, included in the service provisioning response message, and selects an EES from the candidate EESs as the selected EES.

The UE sends the information about the selected EES to the ECS based on the first indication information or the second indication information included in the service provisioning response message.

For a method and a criterion for selecting the EES by the UE, refer to a related standard. Details are not described herein.

S805: Optionally, the ECS sends EAS collaborative selection indication information to the selected EES.

The EAS collaborative selection indication information includes the UE list and the service identifier of the target service, and the collaborative indication information indicates the selected EES to select a same EAS for all the UEs in the UE list to provide the target service.

It should be noted that this step is optional. If the service provisioning response message in step S803 includes the UE list, when sending an EAS discovery request message to the selected EES, the UE may further send the UE list to the EES. In this way, the selected EES may select the same EAS for the plurality of UEs in the UE list, that is, S805 is optional.

The following describes a process in which after the selected EES is determined, the selected EES determines the same EAS for the plurality of UEs in the UE list based on the UE list and the service identifier of the service that needs to be obtained by the UE in the UE list.

It should be noted that, in the embodiment shown in FIG. 7, the process of S801 to S805 is to discover the EES that can serve the EEC of the UE. When the EES has been obtained by the UE, S801 to S805 may not be performed, that is, the process of S801 to S805 is optional.

S806: The UE sends the EAS discovery request message to the EES.

The EAS discovery request message is used to request the selected EES to perform EAS discovery for the UE, the EAS discovery request message includes the identifier of the UE and the service identifier of the required service, and the required service indicates the service that needs to be obtained by the UE.

Optionally, the EAS discovery request message may further include the UE list.

Optionally, the selected EES may alternatively obtain the UE list in another manner. For example, as described in S805, the ECS may send the UE list to the selected EES, to indicate the selected EES to select the same EAS for the UEs in the UE list. In other words, the selected EES may obtain the UE list from the ECS.

S807: The selected EES determines whether the selected EAS exists.

After the selected EES receives the EAS discovery request message sent by the UE, the selected EES obtains the identifier of the UE and the service identifier of the required service.

The EES determines, based on the identifier of the UE, whether the UE is in the UE list. The EES determines, based on the service identifier, whether the service identifier of the required service is consistent with the service identifier of the target service corresponding to the UE list.

It should be noted herein that, as described in S806, the selected EES may obtain the UE list through the UE or the ECS, and the selected EES may determine, based on the UE list and the identifier of the UE, whether the UE belongs to the UE list.

In some embodiments, the EES determines that the UE is in the UE list, and the service identifier of the required service of the UE is consistent with the service identifier of the target service. If the EES finds that an EAS that provides the target service has been allocated to the UE in the UE list, and the EES obtains information about the EAS and uses the EAS as the selected EAS. The foregoing action may also be described as follows: The EES determines the EAS corresponding to the UE list and the target service.

In some other embodiments, the EES determines that the UE is in the UE list, and the service identifier of the required service of the UE is consistent with the service identifier of the target service. If the EES finds that no selected EAS that provides the target service is allocated to the UE in the UE list; or the EES cannot determine an EAS corresponding to the UE list and the target service, the EES performs EAS discovery and obtains information about one or more EASs that provide the target service for the UE in the UE list. The one or more EASs may be referred to as candidate EASs.

S808: The EES sends an EAS discovery response message to the UE.

The EAS discovery response message may include information about one or more EASs, and the one or more EASs may include the selected EAS.

The information about the one or more EASs may be represented in a form of a list of EASs.

In some embodiments, if the EES obtains the information about the selected EAS, the EAS discovery response message includes the information about the selected EAS.

Optionally, the EAS discovery response message may further include information about the candidate EASs and indication information, where the indication information indicates the EEC to select the selected EAS, and the candidate EAS may be used as a standby EAS.

In some other embodiments, if the EES obtains information about the candidate EASs, the information about the one or more EASs included in the EAS discovery response message is the information about the candidate EASs.

The EAS discovery response message may further include third indication information, and the third indication message indicates the UE to report information about an EAS selected from the candidate EASs to the selected EES.

S809: Optionally, the UE sends an EAS selection notification response message to the EES.

When the EAS discovery response message received by the UE includes information about one or more EASs, the UE needs to select one EAS from the one or more EASs as the selected EAS.

Based on the second indication information described in S804 or the third indication information described in S808, the UE sends the information about the selected EAS to the selected EES. The EAS selection notification response message includes the identifier of the UE, the information about the selected EAS, and the service identifier of the required service of the UE.

For a method and a criterion for determining the selected EAS by the UE, refer to a related standard. Details are not described herein.

An identity of a terminal device is first confirmed by using the UE list and the identifier of the UE, to determine that the terminal device belongs to the UE list, and then a type of the service that needs to be obtained by the UE is determined based on the identifier of the target service in the UE list and the service identifier of the required service of the UE. In this embodiment of this application, the selected EES determined by the ECS for the UE may serve the UE to obtain a service that is the same as that obtained by another UE in the UE list, and the selected EAS determined by the EES for the UE may provide an application service for the UE to obtain a service that is the same as that obtained by another UE in the UE list. In comparison with a method in which that the UE needs to obtain a type of a service is not considered, the application server discovery method provided in this embodiment helps determine, for a plurality of UEs, an application server that provides a same application service, and helps a plurality of terminal devices obtain consistent application service experience when obtaining more application services.

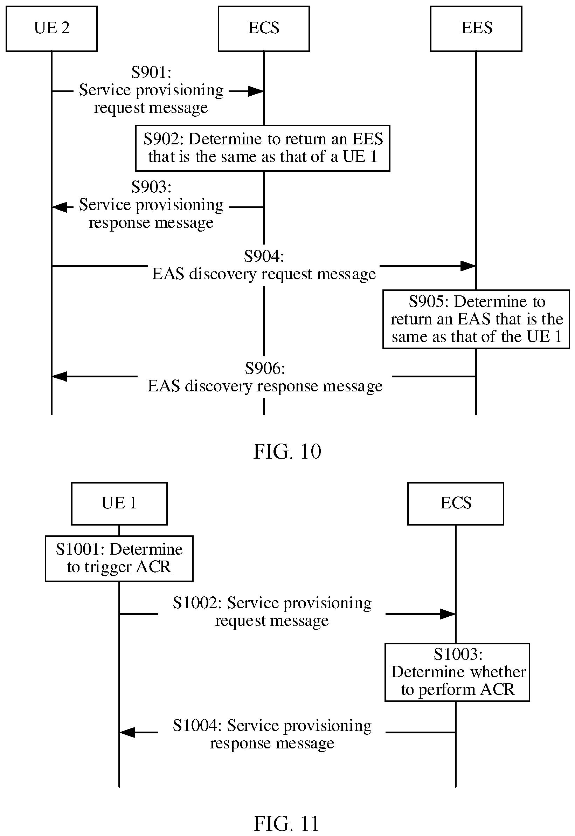

With reference to FIG. 9, the foregoing describes a process in which the ECS and the EES determine the same EES and the same EAS for the plurality of UEs in the UE group based on the UE list and the service identifier. With reference to FIG. 10, the following describes a process in which an ECS and an EES determine, for a UE 2 based on a service identifier and an identifier of a UE 1, an EES that is the same as that of the UE 1 and an EAS that is the same as that of the UE 1.

For ease of description, in the following description, a selected EES represents the same EES, and a selected EAS represents the same EAS. First, a process in which the ECS determines, for the UE 2, the EES (selected EES) that is the same as that of the UE 1 is described.

It should be noted that, before the UE 2 triggers to perform the following steps, the UE 2 needs to obtain the identifier of the UE 1, and the UE 2 and the UE 1 have a same service requirement herein.

It should be further noted that, before the UE 2 triggers to perform the following steps, the UE 1 has selected and accessed an EAS of a service, and a network side may obtain the service identifier of the service of the UE 1 and an identifier or address of the EAS.

The UE 2 may obtain the identifier of the UE 1 in different manners such as online or offline. This is not limited in this application.

For example, the UE 1 and the UE 2 agree on a network conference, and the network conference may be accessed by using mobile phone numbers of the UE 1 and the UE 2. The UE 2 locally stores the mobile phone number of the UE 1, in other words, the UE 2 obtains the identifier of the UE 1. The UE 2 may obtain the identifier of the UE 1 in an online or offline manner.

Similarly, for example, the UE 1 and the UE 2 agree on an online game, and the UE 1 sends a game invitation link to the UE 2 through online communication, where the game invitation link may include the identifier (identity information in the game) of the UE 1 and a service type (game service). The UE 2 may obtain the identifier of the UE 1 based on the game invitation link.

It should be noted that the identifier of the UE 1 may alternatively be an identifier for an association between the UE 1 and the UE 2, for example, a conference number or a game room number.

S901: The UE 2 sends a service provisioning request message to the ECS.

The service provisioning request message is used to request the ECS to discover an EES. The service provisioning request message may also be referred to as an edge platform discovery request message or may have another name. This is not limited in this application.

The service provisioning request message includes an identifier of the UE 2, the identifier of the UE 1, and a service identifier of a required service, where the required service is a service that needs to be accessed by the UE 2.

It should be noted that the identifier of the UE 1 may alternatively be an identifier for an association between the UE 1 and the UE 2, for example, a conference number or a game room number.

Optionally, the service provisioning request message further includes fourth indication information, and the fourth indication information indicates to allocate, to the current UE, an EAS that is the same as that of the UE 1.

S902: The ECS determines a selected EES.

After receiving the service provisioning request message sent by the UE 2, the ECS may obtain the identifier of the UE 2, the identifier of the UE 1, and the service identifier of the required service.

Optionally, the ECS may further obtain fourth indication information, where the fourth indication information indicates that the UE 2 has a requirement of selecting a same EAS as the UE 1. Alternatively, the fourth indication information indicates that the UE 2 has a requirement of selecting a same EAS as the UE 1 for the service.

In some embodiments, the service provisioning request message includes the fourth indication information, and the ECS determines, based on the fourth indication information and the identifier of the UE 1, to use an EES selected by the UE 1 as the selected EES and feeds back the selected EES to the UE 2.

In some other embodiments, if the service provisioning request message does not include the fourth indication information, the ECS may determine, based on identification information of the UE 1, to feed back an EES selected by the UE 1 as the selected EES to the UE 2.

Specifically, if the ECS obtains that the service provisioning request message includes identification information of a non-current UE, the ECS determines to allocate, to the current UE, an EES that is the same as that of the UE corresponding to an identifier of the non-current UE.

The ECS may obtain, by using a plurality of methods, the EES selected by the UE 1. This is not limited in this embodiment of this application. For example, the ECS may obtain, through the login server, the EES selected by the UE 1. Similarly, for example, the ECS may send a request message to the UE 1, where the request message includes a service identifier of a service accessed by the UE 2, and the request message is used to request the UE 1 to report, to the ECS, information about an EES used for accessing the service corresponding to the service identifier.

S903: The ECS sends a service provisioning response message to the UE 2.

The service provisioning response message may be referred to as an edge platform discovery response message or may have another name. This is not limited in this application. The service provisioning response message includes information about the selected EES.

In some embodiments, the service provisioning response message may include information about one or more EESs, and the one or more EESs include the selected EES. The service provisioning response message may further include indication information, and the indication information indicates the UE 2 to select the selected EES.

In some other embodiments, the service provisioning response message includes only the information about the selected EES.

After receiving the service provisioning response message, the UE 2 may obtain the information about the selected EES, and then request the selected EES to feed back information about an EAS selected by the UE 1.

The following describes a process in which after the selected EES is determined, the selected EES determines the same EAS as the UE 1 for the UE 2. It should be noted that, in the embodiment shown in FIG. 9, the process of S901 to S903 is to discover the EES of the UE 1. When the EES has been obtained by the UE 2, S901 to S903 may not be performed, in other words, the process of S901 to S903 is optional.

S904: The UE 2 sends an EAS discovery request message to the selected EES.

The EAS discovery request message is used to request to obtain information about one or more EASs from the selected EES, and the one or more EASs are used to provide an application service for the UE 2. The EAS discovery request message includes the identifier of the UE 2, the identifier of the UE 1, and the service identifier of the required service, where the required service is the service that needs to be obtained by the UE 2.

Optionally, the EAS discovery request message may further include fifth indication information, and the fifth indication information indicates the selected EES to feed back, for the UE 2, information about an EAS that is the same as the EAS that provides the service corresponding to the service identifier and that is of the UE 1. Alternatively, the fifth indication information indicates that the UE 2 has a requirement of selecting the same EAS as the UE 1 for the service.

S905: The EES determines an EAS.

After receiving the EAS discovery request message sent by the UE 2, the selected EES may obtain the identifier of the UE 2, the identifier of the UE 1, and the service identifier of the required service.

Optionally, the selected EES may further obtain the fifth indication information, where the fifth indication information indicates that the UE 2 has the requirement of selecting the same EAS as the UE 1.

In some embodiments, the EAS discovery request message includes the fifth indication information, and the selected EES determines, based on the fifth indication information and the identifier of the UE 1, to send the EAS selected by the UE 1 as the selected EAS to the UE 2.

In some other embodiments, the EAS discovery request message does not include the fifth indication information, and the selected EES determines, based on the identifier of the UE 1, to send the EAS selected by the UE 1 as the selected EAS to the UE 2.

Specifically, if the EES obtains that the EAS discovery request message includes identification information of a non-current UE, the EES determines to allocate, to the current UE, an EAS that is the same as that of the UE corresponding to an identifier of the non-current UE.

The EES may obtain, by using a plurality of methods, the EAS selected by the UE 1. This is not limited in this embodiment of this application. For example, the EES may obtain, through the login server, the EES selected by the UE 1. Similarly, for example, the EES may send a request message to the UE 1, where the request message includes a service identifier of a service accessed by the UE 2, and the request message is used to request the UE 1 to report, to the EES, information about an EAS that provides the service corresponding to the service identifier for the UE 1.

S906: The EES sends an EAS discovery response message to the UE.

In some embodiments, the EAS discovery response message may include information about one or more EASs, and the one or more EASs include the selected EAS. The EAS discovery response message may further include indication information, and the indication information indicates the UE 2 to select the selected EAS.

In some other embodiments, the EAS discovery response message includes only the information about the selected EES.

The EAS discovery response message includes information about the selected EAS.

Optionally, the EAS discovery response message may include information about one or more EASs, and the one or more EASs include the selected EAS.

After receiving the EAS discovery response message, the UE may obtain the information about the selected EAS.

In this embodiment of this application, the ECS may determine, for the UE 2 based on the identifier of the UE 1 and the service identifier that are sent by the UE 2, the EES consistent with that of the UE 1, and the EES may determine, for the UE 2 based on the identifier of the UE 1 and the service identifier that are sent by the UE 2, the EAS consistent with that of the UE 1. Therefore, the technical solution in this embodiment of this application helps the UE 2 obtain same application service experience as that of the UE 1.

With reference to FIG. 8 to FIG. 10, the foregoing describes a process of determining, initiated by using an application function request message, a same EES and a same EAS for a plurality of UEs. With reference to FIG. 11 to FIG. 16, the following describes a process in which an ECS and an EES determine a same EES and a same EAS for a plurality of UEs in a process of triggering application context relocation (ACR).

The ECS may determine whether ACR needs to be performed for one or more UEs, to determine whether to discover a target EES for the one or more UEs. The EES may alternatively determine whether ACR needs to be performed for one or more UEs, to determine whether to discover a target EAS for the one or more UEs. Similarly, the EAS may alternatively determine whether ACR needs to be performed for one or more UEs, to perform an ACR procedure for the UE.

In a process of performing ACR for a group of UEs, one or more of the ECS, the EES, or the EAS may determine whether to perform ACR for the UE. This is described in the following with reference to FIG. 11 to FIG. 16.

For ease of description, in the following embodiments, a source EES (S-EES) and a source EAS (S-EAS) represent an EES and an EAS that serve a UE before application context relocation, and a target EES (T-EES) and a target EAS (T-EAS) represent an EES and an EAS that serve the UE after application context relocation. The target EES and the target EAS may alternatively have other names. This is not limited in embodiments of this application.

The application context relocation event may be detected by the UE, or may be detected by the S-EES or the S-EAS, or may be detected by the T-EES or the T-EAS. This is separately described below.

During initial EAS discovery, a UE 1 is connected to an S-EAS and obtains an edge computing service. In this way, before the UE 1 initiates ACR, an EEC, an ECS, and an S-EES have obtained information about a UE list or a group identifier of a UE group, and a quantity of UEs included in the UE group.

S1001: The UE 1 detects and determines whether to initiate ACR.

Specifically, the EEC or an AC of the UE 1 detects an event that triggers ACR and determines whether to perform ACR.

For a basis for determining, by the UE 1, whether to initiate ACR, refer to a related standard. This is not improved in this embodiment of this application, and details are not described herein.

S1002: The UE 1 sends a service provisioning request message to the ECS.

In S1001, the UE 1 determines that ACR needs to be initiated, and the UE 1 sends the service provisioning request message to the ECS.

Specifically, the AC of the UE 1 requests an edge computing service from the EEC through an EDGE-5 interface, and requests to discover an EAS and obtain information such as an address of the EAS. After receiving a request message sent by the AC, the EEC of the UE sends the service provisioning request message to the ECS.

The service provisioning request message is used to request the ECS to discover a T-EES. The service provisioning request message may also be referred to as an edge platform discovery request message or may have another name. This is not limited in this application.

The service provisioning request message may include information such as an identifier of the UE and a location of the UE.

Optionally, the service provisioning request message may further include the UE list or the group identifier of the UE group and the quantity of UEs included in the UE group.

The UE list or the group identifier of the UE group and the quantity of UEs included in the UE group may be sent by the AC to the EEC, and further be sent by the EEC to the ECS; or may be obtained by the EEC in another manner and then sent to the ECS.

S1003: The ECS determines whether to perform ACR.

After receiving the service provisioning request message sent by the UE 1, the ECS may obtain the UE list or the group identifier of the UE group and the quantity of UEs in the UE group that are included in the service provisioning request message. Based on the content of the service provisioning request message, the ECS determines whether to reselect an EES for one or more UEs included in the UE list or one or more UEs in the UE group, in other words, whether to perform application context relocation.

Specifically, the ECS may determine, according to a specific rule, whether to reselect the EES for the one or more UEs in the UE list or the UE group.

In some embodiments, the ECS determines, according to a specific rule, whether to select a T-EES for all UEs in the UE list or the UE group.

For example, when the ECS determines that a quantity of UEs, in the UE group, that exceeds a threshold quantity move; or when the ECS determines that one or more UEs in the UE group are not suitable for connecting to the current EAS (for example, cannot be connected to the current EAS), the ECS determines that application context relocation needs to be performed for all the UEs in the UE group, in other words, the T-EES needs to be discovered.

Similarly, for example, when determining that a UE in the UE group is not suitable for connecting to the current EAS, the ECS determines that it is not suitable for selecting a same EES for all the UEs in the UE group, or the ECS determines to select a same EAS for all the UEs in the UE group, service performance provided by an edge data network for the UEs in the UE list or the UE group is poor. In this case, the ECS determines that application context relocation needs to be performed for the UE, in other words, the T-EES needs to be discovered.

In some other embodiments, the ECS determines, according to a specific rule, whether to group all UEs in the UE list or the UE group into a plurality of groups, and selects a T-EES for one or more moving UEs.

For example, the ECS may determine, based on an expected service range reported by the one or more moving UEs, all the UEs that need the service range as a group, and determine a same T-EES for the group of UEs.

In an embodiment, after the ECS receives a service provisioning request message of a 1^{st} UE, in the UE list, that requests to discover an EES, the ECS determines, based on an expected service range included in the service provisioning request message, the EES for the 1^{st} UE that requests to discover an EES, and uses the EES as an EES that serves the UE in the UE list.

S1004: The ECS sends a service provisioning response message to the UE 1.

The service provisioning response message may also be referred to as an edge platform discovery response message or an EES discovery response message, or may have another name. This is not limited in this application.

In some embodiments, if the ECS determines, in S1003, that the EES needs to be reselected for the UE, the service provisioning response message includes information about the T-EES and the UE list.

Optionally, the service provisioning response message may further include one or more of the following information: the group identifier of the UE group to which the UE belongs, the quantity of UEs included in the UE group, or location information of all the UEs in the UE group. The location information of all the UEs in the UE group may be obtained by the ECS from a core network (5 generation core, 5GC).

In some other embodiments, if the ECS determines, in S1003, that the EES needs to be reselected for the UE, the service provisioning response message may include information about a plurality of EESs, the UE list, and indication information, where the indication information indicates to select an EES from the plurality of EESs.

In some still other embodiments, when the ECS determines, in S1003, that the EES does not need to be reselected for the UE, or ACR does not need to be initiated for the UE, the service provisioning response message indicates not to change the EES or the request for discovering the T-EES fails.

In this embodiment of this application, ACR detection and triggering are performed by the UE, and the ECS determines whether to perform ACR for the plurality of terminal devices in the UE group. When determining whether to perform ACR, the ECS considers states and information of the plurality of UEs in the UE group. This helps determine, for the plurality of terminal devices, the same EES that is applicable to the plurality of terminal devices.

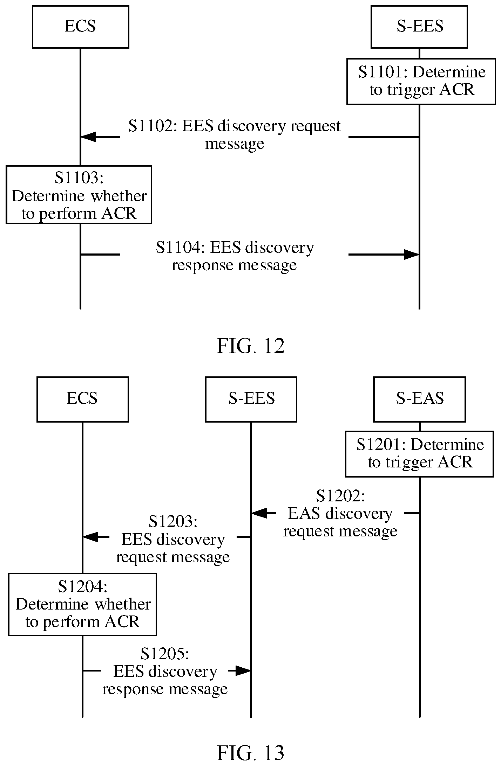

FIG. 11 describes an execution process in which the ECS determines whether to perform ACR. The following describes, with reference to FIG. 12, a process in which an S-EES detects and triggers an ACR event, and the ECS determines whether to perform ACR.

During initial EAS discovery, a UE 1 is connected to a source EAS and obtains an edge computing service. In this way, before the UE 1 initiates ACR, an EEC, an ECS, and an S-EES have obtained information about a UE list or a group identifier of a UE group, and a quantity of UEs included in the UE group.

S1101: The S-EES detects an ACR event.

The S-EES detects the event that triggers ACR and determines whether to perform ACR.

For a basis for determining, by the S-EES, whether to initiate ACR, refer to a related standard. This is not improved in this embodiment of this application, and details are not described herein.

Optionally, the S-EES may alternatively determine whether to initiate ACR for one or more UEs in the UE list or the UE group.

Specifically, the S-EES may determine, according to a specific rule, whether to initiate ACR for the one or more UEs in the UE list or the UE group.

In some embodiments, the S-EES determines, according to a specific rule, whether to initiate ACR for all UEs in the UE list or the UE group.

For example, when the S-EES determines that a quantity of UEs, in the UE group, that exceeds a threshold quantity move; or when the S-EES determines that one or more UEs in the UE group are not suitable for connecting to a current EAS (for example, cannot be connected to the current EAS), the S-EES determines that application context relocation needs to be performed for all the UEs in the UE group.

Similarly, for example, when determining that a UE in the UE group is not suitable for connecting to the current EAS, the S-EES determines that it is not suitable for selecting a same EAS for all the UEs in the UE group, or the S-EES determines to select a same EAS for all the UEs in the UE group, service performance provided by an edge data network for the UEs in the UE list or the UE group is poor. In this case, the S-EES determines that application context relocation needs to be performed for the UE.

In some other embodiments, the S-EES determines, according to a specific rule, whether to group all UEs in the UE list or the UE group into a plurality of groups, and initiates ACR for one or more moving UEs.

For example, the S-EES may determine, based on an expected service range reported by the one or more moving UEs, all the UEs that need the service range as a group.

S1102: The S-EES sends an EES discovery request message to the ECS.

In S1101, when the S-EES determines to trigger ACR for the UE 1, the S-EES sends the EES discovery request message to the ECS.

The EES discovery request message includes an identifier of the UE 1 served by the S-EES, location information of the UE 1, the UE group identifier of the UE 1, or the UE list including the UE 1. The EES discovery request message is used to request the ECS to discover a T-EES for the UE 1.

Optionally, the EES discovery request message may further include an expected service range of the UE 1, where the expected service range is an expected application service range that is determined based on the location information of the UE.

Specifically, the expected service range may be a level of an EES or EAS service range (for example, a district-level or city-level EES), or may be a specific geographical service range (for example, the service range is an EAS in Beijing). The EES discovery request message may further include indication information, and the indication information indicates to discover an EES for the plurality of UEs. The indication information may be an explicit indication or may be an implicit indication.

For example, the indication information is an explicit indication, to be specific, the indication information directly indicates that the EES that needs to be discovered is used to provide an application service for the plurality of UEs.

For example, the indication information is an implicit indication, and the implicit indication may be the UE list or the group identifier of the UE group. After obtaining the UE list or the group identifier of the UE group, the ECS may determine that the EES that needs to be discovered is used to provide an application service for the plurality of UEs.

S1103: Optionally, the ECS determines whether to perform ACR.

When the S-EES has determined that ACR needs to be initiated for the UE, the step of determining, by the ECS, whether to perform ACR may not be performed, that is, S1103 is optional.

After receiving the EES discovery request message, the ECS may obtain the UE list or the group identifier of the UE group and the quantity of UEs in the UE group that are included in the service provisioning request message. Based on the content of the EES discovery request message, the ECS determines whether to reselect an EES for all UEs included in the UE list or one or more UEs in the UE group, in other words, whether to perform application context relocation.

Specifically, the ECS may determine, according to a specific rule, whether to reselect the EES for the one or more UEs in the UE list or the UE group.

In some embodiments, the ECS determines, according to a specific rule, whether to select a T-EES for all UEs in the UE list or the UE group.

For example, when the ECS determines that a quantity of UEs, in the UE group, that exceeds a threshold quantity move; or when the ECS determines that one or more UEs in the UE group are not suitable for connecting to the current EAS (for example, cannot be connected to the current EAS), the ECS determines that application context relocation needs to be performed for all the UEs in the UE group, in other words, the T-EES needs to be discovered.

Similarly, for example, when determining that a UE in the UE group is not suitable for connecting to the current EAS, the ECS determines that it is not suitable for selecting a same EES for all the UEs in the UE group, or the ECS determines to select a same EAS for all the UEs in the UE group, service performance provided by an edge data network for the UEs in the UE list or the UE group is poor. In this case, the ECS determines that application context relocation needs to be performed for the UE, in other words, the T-EES needs to be discovered.

In some other embodiments, the ECS determines, according to a specific rule, whether to group all UEs in the UE list or the UE group into a plurality of groups, and selects a T-EES for one or more moving UEs.

For example, the ECS may determine, based on an expected service range reported by the one or more moving UEs, all the UEs that need the service range as a group, and determine a same T-EES for the group of UEs.

S1104: The ECS sends an EES discovery response message to the S-EES.

After determining whether the EES needs to be reselected for the UE or some or all UEs in the UE list, the ECS sends the EES discovery response message to the S-EES.

Content of the EES discovery response message may alternatively be carried in the EES discovery response message or another message. This is not limited in this application.

In some embodiments, in S1103, if the ECS determines that the EES needs to be reselected for the UE, the EES discovery response message includes information about the T-EES and the UE list.

Optionally, the EES discovery response message may further include one or more of the following information: the group identifier of the UE group to which the UE belongs, the quantity of UEs included in the UE group, or location information of all the UEs in the UE group. The location information of all the UEs in the UE group may be obtained by the ECS from a core network (5GC).

In some other embodiments, if the ECS determines, in S1103, that the EES needs to be reselected for the UE, the EES discovery response message may include information about a plurality of EESs, the UE list, and indication information, where the indication information indicates to select an EES from the plurality of EESs.

After receiving the EES discovery response message sent by the ECS, the S-EES may obtain the information about the plurality of EESs, and further, the S-EES may determine one T-EES from the plurality of EESs based on the expected service range of the UE.

Optionally, the S-EES may select one T-EES based on the indication information after receiving the EES discovery response message.

In some still other embodiments, in S1103, if the ECS determines that the EES does not need to be reselected for the UE, or ACR does not need to be initiated for the UE, the EES discovery response message indicates not to change the EES or the request for discovering the T-EES fails.

In this embodiment of this application, ACR detection and triggering are performed by the S-EES, and the ECS determines whether to perform ACR for the plurality of terminal devices in the UE group. When determining whether to perform ACR, the ECS considers states and information of the plurality of UEs in the UE group. This helps determine, for the plurality of terminal devices, the same EES that is applicable to the plurality of terminal devices.

The ACR detection may alternatively be performed by an S-EAS, and a corresponding execution process is shown in FIG. 13.

During initial EAS discovery, a UE 1 is connected to an S-EAS and obtains an edge computing service. In this way, before the UE 1 initiates ACR, an EEC, an ECS, and an S-EES have obtained information about a UE list or a group identifier of a UE group, and a quantity of UEs included in the UE group.

S1201: The S-EAS detects an ACR event.

The S-EAS detects the event that triggers ACR and determines whether to perform ACR.

For a basis for determining, by the S-EAS, whether to initiate ACR, refer to a related standard. This is not improved in this embodiment of this application, and details are not described herein.

Optionally, the S-EAS may alternatively determine whether to initiate ACR for one or more UEs in the UE list or the UE group.

Specifically, the S-EAS may determine, according to a specific rule, whether to initiate ACR for the one or more UEs in the UE list or the UE group.

In some embodiments, the S-EAS determines, according to a specific rule, whether to initiate ACR for all UEs in the UE list or the UE group.

For example, when the S-EAS determines that a quantity of UEs, in the UE group, that exceeds a threshold quantity move; or when the S-EAS determines that one or more UEs in the UE group are not suitable for connecting to the current EAS (for example, cannot be connected to the current EAS), the S-EAS determines that application context relocation needs to be performed for all the UEs in the UE group.

Similarly, for example, when determining that a UE in the UE group is not suitable for connecting to the current EAS, the S-EAS determines that it is not suitable for selecting a same EAS for all the UEs in the UE group, or the S-EAS determines to select the same EAS for all the UEs in the UE group, service performance provided by an edge data network for the UEs in the UE list or the UE group is poor. In this case, the S-EAS determines that application context relocation needs to be performed for the UE.

In some other embodiments, the S-EAS determines, according to a specific rule, whether to group all UEs in the UE list or the UE group into a plurality of groups, and initiates ACR for one or more moving UEs.

For example, the S-EAS may determine, based on an expected service range reported by the one or more moving UEs, all the UEs that need the service range as a group.

S1202: Optionally, the S-EAS sends an EAS discovery request message to the S-EES.

When the S-EAS determines, in S1201, that ACR needs to be performed, the S-EAS sends the EAS discovery request message to the S-EES, where the EAS discovery request message includes an identifier of the UE, location information of the UE, and the UE list.

Alternatively, the EAS discovery request message includes an identifier of the UE, location information of the UE, and the group identifier of the UE group to which the UE belongs. Optionally, the EAS discovery request message may further include the quantity of UEs included in the UE group.

Optionally, the EAS discovery request message may further include an expected service range or indication information. The expected service range is an expected service range determined based on the location information of the UE. The indication information indicates the ECS to select a same EES for the UEs in the UE group. The indication information may alternatively indicate the EES to select a same EAS for the UEs in the UE group.

Optionally, the EAS discovery request message may further include information about an expected service range of the UE, where the expected service range is an expected application service range determined based on the location information of the UE.

Specifically, the expected service range may be a level of an EES or EAS service range (for example, a district-level or city-level EES), or may be a specific geographical service range (for example, the service range is an EAS in Beijing).

The EAS discovery request message may further include indication information, and the indication information indicates to discover an EAS for the plurality of UEs. The indication information may be an explicit indication or may be an implicit indication.

For example, the indication information is an explicit indication, to be specific, the indication information directly indicates that the EAS that needs to be discovered is used to provide an application service for the plurality of UEs.

For example, the indication information is an implicit indication, and the implicit indication may be the UE list or the group identifier of the UE group. After obtaining the UE list or the group identifier of the UE group, the S-EES may determine that the EAS that needs to be discovered is used to provide an application service for the plurality of UEs.

S1203: The S-EES sends an EES discovery request message to the ECS.

Optionally, after receiving the EAS discovery request message sent by the S-EAS, the S-EES may further determine whether ACR needs to be initiated for one or more UEs in the UE group or the UE list. A specific determining process is similar to the related description in S1101. For brevity, details are not described herein again.

The EES discovery request message includes an identifier of a UE served by the source EES, location information of the UE, a UE group identifier of the UE, or a UE list including the UE. The EES discovery request message is used to request the ECS to discover a T-EES for the UE.

Optionally, the EES discovery request message may further include an expected service range of the UE, where the expected service range is an expected application service range determined based on the location information of the UE.

Specifically, the expected service range may be a level of an EES or EAS service range (for example, a district-level or city-level EES), or may be a specific geographical service range (for example, the service range is an EAS in Beijing).

S 1204: Optionally, the ECS determines whether to perform ACR.

When the S-EAS or the S-EES has determined that ACR needs to be initiated for the UE, the step of determining, by the ECS, whether to perform ACR may not be performed, that is, S 1204 is optional.

After receiving the EES discovery request message, the ECS may obtain the UE list or the group identifier of the UE group and the quantity of UEs in the UE group that are included in the service provisioning request message. Based on the content of the EES discovery request message, the ECS determines whether to reselect an EES for all the UEs included in the UE list or one or more UEs in the UE group, in other words, whether to perform application context relocation.

Specifically, the ECS may determine, according to a specific rule, whether to reselect the EES for the one or more UEs in the UE list or the UE group.

In some embodiments, the ECS determines, according to a specific rule, whether to select a T-EES for all the UEs in the UE list or the UE group.

For example, when the ECS determines that a quantity of UEs, in the UE group, that exceeds a threshold quantity move; or when the ECS determines that one or more UEs in the UE group are not suitable for connecting to the current EAS (for example, cannot be connected to the current EAS), the ECS determines that application context relocation needs to be performed for all the UEs in the UE group, in other words, the T-EES needs to be discovered.

Similarly, for example, when determining that a UE in the UE group is not suitable for connecting to the current EAS, the ECS determines that it is not suitable for selecting a same EES for all the UEs in the UE group, or the ECS determines to select a same EAS for all the UEs in the UE group, service performance provided by an edge data network for the UEs in the UE list or the UE group is poor. In this case, the ECS determines that application context relocation needs to be performed for the UE, in other words, the T-EES needs to be discovered.

In some other embodiments, the ECS determines, according to a specific rule, whether to group all the UEs in the UE list or the UE group into a plurality of groups, and selects a T-EES for one or more moving UEs.

For example, the ECS may determine, based on an expected service range reported by the one or more moving UEs, all the UEs that need the service range as a group, and determine a same T-EES for the group of UEs.

S1205: The ECS sends an EES discovery response message to the S-EES.

After determining whether the EES needs to be reselected for the UE or some or all UEs in the UE list, the ECS sends the EES discovery response message to the S-EES.

Content of the EES discovery response message may alternatively be carried in the EES discovery response message or another message. This is not limited in this application.

In some embodiments, in S1204, if the ECS determines that the EES needs to be reselected for the UE, the EES discovery response message includes information about the T-EES and the UE list.

Optionally, the EES discovery response message may further include one or more of the following information: the group identifier of the UE group to which the UE belongs, the quantity of UEs included in the UE group, or location information of all the UEs in the UE group. The location information of all the UEs in the UE group may be obtained by the ECS from a core network (5GC).

In some other embodiments, if the ECS determines, in S1204, that the EES needs to be reselected for the UE, the EES discovery response message may include information about a plurality of EESs, the UE list, and indication information, where the indication information indicates to select an EES from the plurality of EESs.

After receiving the EES discovery response message sent by the ECS, the S-EES may obtain the information about the plurality of EESs, and further, the S-EES may determine one T-EES from the plurality of EESs based on the expected service range of the UE.

Optionally, the S-EES may select one T-EES based on the indication information after receiving the EES discovery response message.

In some still other embodiments, in S1204, if the ECS determines that the EES does not need to be reselected for the UE, or ACR does not need to be initiated for the UE, the EES discovery response message indicates not to change the EES or the request for discovering the T-EES fails.

In this embodiment of this application, ACR detection and triggering are performed by the S-EAS, and the ECS determines whether to perform ACR for the plurality of terminal devices in the UE group. When determining whether to perform ACR, the ECS considers states and information of the plurality of UEs in the UE group. This helps determine, for the plurality of terminal devices, the same EES that is applicable to the plurality of terminal devices.

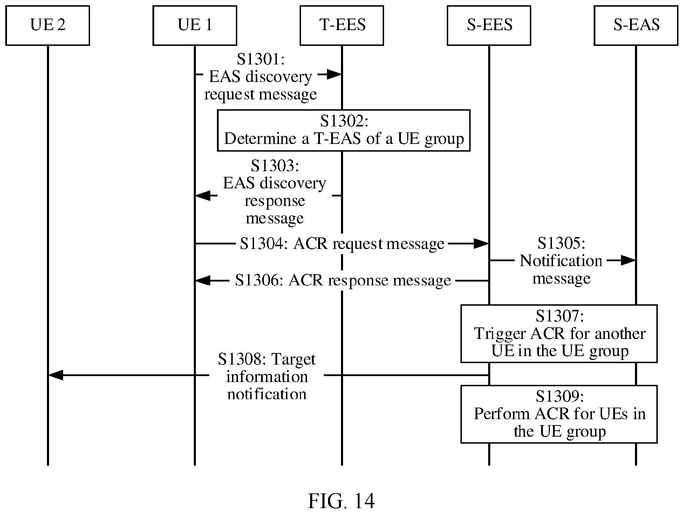

FIG. 11 to FIG. 13 describe a process in which the ECS determines whether to perform ACR. The following describes a process in which a T-EES discovers a T-EAS with reference to FIG. 14 to FIG. 16. It should be noted that, when the T-EES has been obtained by the UE or the T-EES does not need to be changed, the process in which the ECS determines the T-EES may not be performed, in other words, for a process in which the T-EES discovers the T-EAS or a candidate ACR process, the process in which the ECS discovers the T-EES is optional.

FIG. 14 shows an execution process of determining a same T-EAS for a plurality of UEs in a UE group in an ACR event process triggered by a UE 1.

During initial EAS discovery, the UE 1 is connected to an S-EAS and obtains an edge computing service. In this way, before the UE 1 initiates ACR, an EEC, an ECS, and an S-EES have obtained information about a UE list or a group identifier of a UE group, and a quantity of UEs included in the UE group.

S1301: The UE 1 sends an EAS discovery request message to a T-EES.

Before the UE 1 sends the EAS discovery request message, the UE 1 has obtained information about the T-EES (for example, address information of the T-EES). For example, as shown in FIG. 11, the UE 1 may obtain the information about the T-EES by receiving a service provisioning response message sent by the ECS.

The EAS discovery request message is used to request the T-EES to perform EAS discovery for the UE. The EAS discovery request message includes information such as the UE list, an identifier of the UE, and a location of the UE.

Optionally, the EAS discovery request message may further include location information of all UEs included in the UE list.

Optionally, the EAS discovery request message may alternatively include indication information, and the indication information indicates the T-EES to perform an EAS discovery procedure by using latest location information of the UE. The indication information may further indicate the T-EES to obtain location information of all UEs in the UE list from a core network, the ECS, or in another manner.

Optionally, the EAS discovery request message may further include information about the group identifier of the UE group and the quantity of UEs included in the UE group.

S1302: The T-EES determines a T-EAS.

After receiving the EAS discovery request message, the T-EES obtains the identifier of the UE, the location information of the UE, and the UE list that are included in the EAS discovery request message. The T-EES determines the T-EAS based on the EAS discovery request message.

Optionally, before determining the T-EAS, the T-EES may first determine whether to initiate ACR for one or more UEs in the UE list or the UE group.

Specifically, the T-EES may determine, according to a specific rule, whether to initiate ACR for the one or more UEs in the UE list or the UE group.

In some embodiments, the T-EES determines, according to a specific rule, whether to initiate ACR for all the UEs in the UE list or the UE group.

For example, when the T-EES determines that a quantity of UEs, in the UE group, that exceeds a threshold quantity move; or when the T-EES determines that one or more UEs in the UE group are not suitable for connecting to the current EAS (for example, cannot be connected to the current EAS), the T-EES determines that application context relocation needs to be performed for all the UEs in the UE group.

Similarly, for example, when determining that a UE in the UE group is not suitable for connecting to the current EAS, the T-EES determines that it is not suitable for selecting a same EAS for all the UEs in the UE group, or the T-EES determines to select the same EAS for all the UEs in the UE group, service performance provided by an edge data network for the UEs in the UE list or the UE group is poor. In this case, the T-EES determines that application context relocation needs to be performed for the UE.

In some other embodiments, the T-EES determines, according to a specific rule, whether to group all the UEs in the UE list or the UE group into a plurality of groups, and initiates ACR for one or more moving UEs.

For example, the T-EES may determine, based on an expected service range reported by the one or more moving UEs, all the UEs that need the service range as a group.

The T-EES selects the T-EAS based on the identifier of the UE and the location information of the UE in the UE list.

In some embodiments, location information of another UE in the UE list is obtained by the T-EES from the core network (5GC).

In some other embodiments, location information of another UE in the UE is included in the EAS discovery request message.

In some embodiments, if the T-EES determines that it is not suitable to select a same EAS for all the UEs in the UE list; or the T-EES determines that, that a plurality of EASs serve all the UEs in the UE list helps improve service performance obtained by the UEs in the UE group, the T-EES selects a plurality of T-EASs for all the UEs in the UE list.

S1303: The T-EES sends an EAS discovery response message to the UE 1.

The EAS discovery response message includes information such as an identifier of one or more T-EASs and an address of the one or more T-EASs.

Optionally, the T-EES may further send the group identifier of the UE group and the quantity of UEs in the UE group to the UE 1.

Optionally, the T-EES may further send the UE list to the UE 1.

Optionally, the T-EES may further send the group identifier of the UE group, the quantity of UEs in the UE group, and the UE list to the UE 1.

S1304: The UE 1 sends an ACR request message to the S-EES or the T-EES.

After receiving the EAS discovery response message, the UE 1 may obtain the identifier of the T-EAS and the address of the T-EAS. After obtaining the foregoing information, the UE 1 may request the S-EES to perform ACR.

Specifically, the UE 1 sends the ACR request message to the S-EES, where the request message is used to request the S-EES to perform ACR for the UE. The ACR request message includes information about the T-EAS, the information about the T-EES, the group identifier of the UE group, or the UE list.

Alternatively, the UE 1 may send the ACR request message to the T-EES, to request the T-EES to perform ACR.

Specifically, the EEC sends the ACR request message to the T-EES, where the request message is used to request the T-EES to perform ACR for the UE. The ACR request message includes information about the S-EAS, information about the S-EES, the group identifier of the UE group, or the UE list.

S1305: Optionally, the S-EES sends a notification message to the S-EAS.

The notification message may include the identifier of the UE and/or the UE list, and the notification message indicates the S-EAS to initiate application context relocation for the UE or all the UEs included in the UE list.

After receiving the notification message, the S-EAS may obtain the identifier of the UE and/or the UE list, so that the S-EAS initiates application context relocation for the UE or all the UEs in the UE list.

Optionally, the notification message further includes indication information, and the indication information indicates the S-EAS to initiate application context relocation for the UE or all the UEs in the UE list, or the indication information may indicate to preferentially initiate application context relocation for a UE.

Alternatively, when the UE 1 sends the ACR request message to the T-EES in S1304, the T-EES may send a notification message to the T-EAS in S1305.

The notification message may include the identifier of the UE and/or the UE list, and the notification message indicates the T-EAS to initiate application context relocation for the UE or all the UEs included in the UE list.

After receiving the notification message, the T-EAS may obtain the identifier of the UE and/or the UE list, so that the T-EAS initiates application context relocation for the UE or all the UEs in the UE list.

Optionally, the notification message further includes indication information, and the indication information indicates the T-EAS to initiate application context relocation for the UE or all the UEs in the UE list, or the indication information may indicate to preferentially initiate application context relocation for a UE.

S1306: The S-EES sends an ACR response message to the UE 1.

After receiving the ACR request message, the S-EES may obtain the information about the T-EES, the information about the T-EAS, and the group identifier of the UE group or the UE list.

The ACR response message indicates, in S1305, whether the S-EAS is successfully notified to initiate application context relocation for the UE or all the UEs included in the UE list.

Alternatively, when the UE 1 sends the ACR request message to the T-EES in S1304, the T-EES may send an ACR response message to the UE 1 in S1306.

S1307: The S-EES or the S-EAS triggers ACR for another UE.

Alternatively, in S1304, when the UE 1 sends the ACR request message to the T-EES, ACR is triggered for another UE in S1307, and the triggering may alternatively be performed by the T-EES or the T-EAS.

S1308: The S-EES or the T-EES sends a target information notification to another UE in the UE list.

The target information notification (target information notification) may include the information about the T-EES and the information about the T-EAS. After obtaining the information about the T-EES and the information about the T-EAS, the another UE in the UE list may directly request the T-EES and the T-EAS to perform ACR, without procedures of detecting an event that triggers ACR and determining whether ACR needs to be performed.

Alternatively, when the EEC subscribes to a notification message related to ACR information from the EES, the S-EES or the T-EES sends ACR complete notification information to the EEC after application context relocation is completed.

S1309: The S-EES or the S-EAS performs ACR for all the UEs in the UE list.

Alternatively, the T-EES or the T-EAS performs ACR for all the UEs in the UE list.

In this embodiment of this application, the UE 1 requests the S-EES to perform ACR. After obtaining the information about the T-EES and the T-EAS, the S-EES sends the information to another UE in the UE group, and indicates the S-EAS to perform ACR for the UEs in the UE group. In this embodiment of this application, efficiency of performing ACR for the plurality of UEs can be improved, and communication signaling overheads of the UE in the process of performing ACR can be reduced.

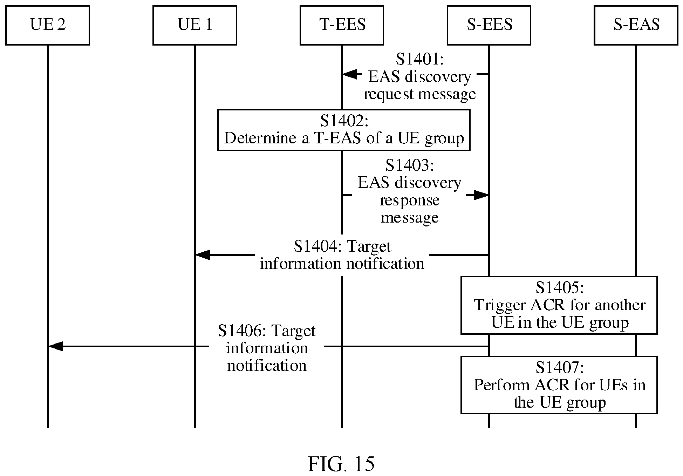

The foregoing describes, with reference to FIG. 14, the process of determining the T-EAS in the execution process of detecting and triggering ACR by a terminal device. The following describes, with reference to FIG. 15, a process of determining a T-EAS in an execution process of detecting and triggering ACR by an S-EES on a network side.

During initial EAS discovery, a UE 1 is connected to an S-EAS and obtains an edge computing service. In this way, before the UE 1 initiates ACR, an EEC, an ECS, and an S-EES have obtained information about a UE list or a group identifier of a UE group, and a quantity of UEs included in the UE group.

S1401: The S-EES sends an EAS discovery request message to a T-EES.

Before the S-EES sends the EAS discovery request message, the S-EES has obtained information about the T-EES (for example, address information of the T-EES). For example, as shown in FIG. 12, the S-EES may obtain the information about the T-EES by receiving a service provisioning response message sent by the ECS.

Optionally, before the S-EES sends the EAS discovery request message, the S-EES may alternatively determine whether to initiate ACR for one or more UEs in the UE list or the UE group. A specific determining process of the S-EES is similar to that in S1101. For details, refer to S1101. Details are not described herein again.

The EAS discovery request message is used to request the T-EES to perform EAS discovery for the UE 1. The EAS discovery request message includes information such as the UE list, an identifier of the UE, and location information of the UE.

Optionally, the EAS discovery request message may further include location information of all UEs included in the UE list.

Optionally, the EAS discovery request message may alternatively include indication information, and the indication information indicates the T-EES to perform an EAS discovery procedure by using latest location information of the UE. The indication information may further indicate the T-EES to obtain location information of all UEs in the UE list from a core network, the ECS, or in another manner.

Optionally, the EAS discovery request message may further include information about the group identifier of the UE group and the quantity of UEs included in the UE group.

Optionally, the EAS discovery request message may further include information about the S-EES and information about the S-EAS.

Optionally, the EAS discovery request message may further include information about an expected service range of the UE, where the expected service range is an expected application service range determined based on the location information of the UE.

Specifically, the expected service range may be a level of an EES or EAS service range (for example, a district-level or city-level EES), or may be a specific geographical service range (for example, the service range is an EAS in Beijing).

The EAS discovery request message may further include indication information, and the indication information indicates to discover an EAS for the plurality of UEs. The indication information may be an explicit indication or may be an implicit indication.

For example, the indication information is an explicit indication, to be specific, the indication information directly indicates that the EAS that needs to be discovered is used to provide an application service for the plurality of UEs.

For example, the indication information is an implicit indication, and the implicit indication may be the UE list or the group identifier of the UE group. After obtaining the UE list or the group identifier of the UE group, the T-EES may determine that an EAS that needs to be discovered is used to provide an application service for the plurality of UEs.

S1402: The T-EES determines a T-EAS.

An execution process of S1402 is similar to that of S1302. For details, refer to S1302. For brevity, details are not described herein again.

S1403: The T-EES sends an EAS discovery response message to the S-EES.

The EAS discovery response message includes information such as an identifier of one or more T-EASs and an address of the one or more T-EASs.

S1404: The S-EES sends a target information notification to the UE 1.

The target information notification may include the information about the T-EES and information about the T-EAS.

S1405: The S-EES or the S-EAS triggers ACR for another UE.

Alternatively, when the EAS discovery request message sent by the S-EES in S1401 includes the information about the S-EES and the information about the S-EAS, ACR is triggered for another UE in S1405, and the triggering may alternatively be performed by the T-EES or the T-EAS.

S1406: The S-EES or the T-EES sends a target information notification to another UE in the UE list.

The target information notification may include the information about the T-EES and information about the T-EAS. After obtaining the information about the T-EES and the information about the T-EAS, the another UE in the UE list may directly request the T-EES and the T-EAS to perform ACR, without procedures of detecting an event that triggers ACR and determining whether ACR needs to be performed.

Alternatively, when the EEC subscribes to a notification message related to ACR information from the EES, the S-EES or the T-EES sends ACR complete notification information to the EEC after application context relocation is completed.

S1407: The S-EES or the S-EAS performs ACR for all the UEs in the UE group.

Alternatively, when the EAS discovery request message in S1401 includes the information about the S-EES and the information about the S-EAS, the T-EES or the T-EAS in S1407 may perform ACR for all the UEs in the UE group.

In this embodiment of this application, after obtaining the information about the T-EAS from the T-EES, the S-EES sends the information about the T-EAS to the UEs in the UE group, and indicates the S-EAS to perform ACR for the UEs in the UE group. In this embodiment of this application, efficiency of performing ACR for the plurality of UEs can be improved, and communication signaling overheads of the UE in the process of performing ACR can be reduced.

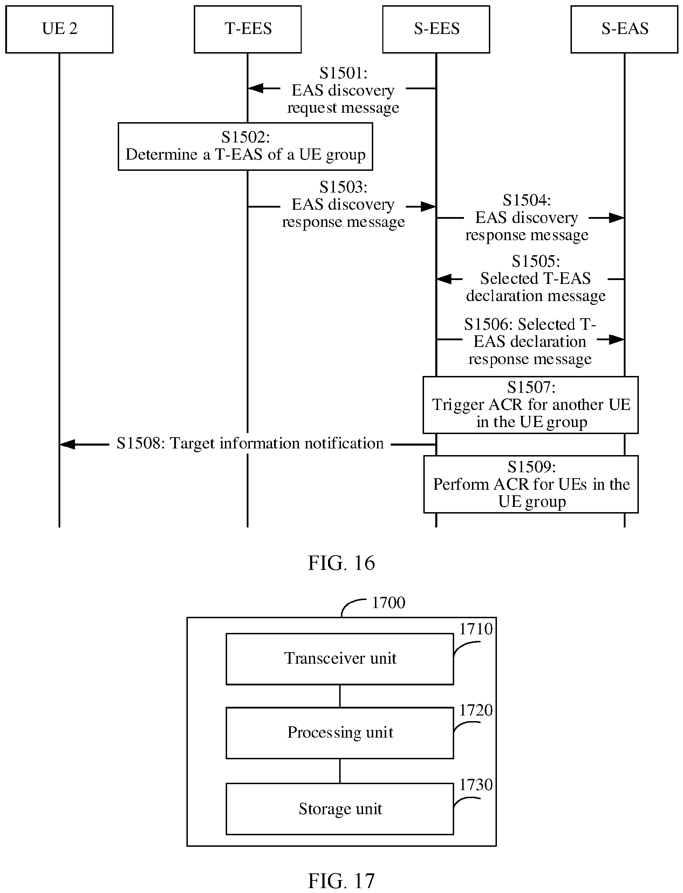

When ACR detection and determining are triggered by an S-EAS, a determining process of a T-EAS is shown in FIG. 16.

During initial EAS discovery, a UE 1 is connected to an S-EAS and obtains an edge computing service. In this way, before the UE 1 initiates ACR, an EEC, an ECS, and an S-EES have obtained information about a UE list, or a group identifier of a UE group, and a quantity of UEs included in the UE group.

S1501: The S-EES sends an EAS discovery request message to a T-EES.

After the S-EES receives the EAS discovery request message sent by the S-EAS, the S-EES performs the execution process shown in FIG. 13. Through the execution process, the S-EES may obtain information about a T-EES, and the S-EES sends the EAS discovery request message to the T-EES in response to the EAS discovery request sent by the S-EAS.

Optionally, before the S-EES sends the EAS discovery request message, the S-EES may alternatively determine whether to initiate ACR for one or more UEs in the UE list or the UE group. A specific determining process of the S-EES is similar to that in S1101. For details, refer to S1101. Details are not described herein again.

The EAS discovery request message is used to request the T-EES to perform EAS discovery for the UE. The EAS discovery request message includes information such as the UE list, an identifier of the UE, and location information of the UE.

Optionally, the EAS discovery request message may further include location information of all UEs included in the UE list.

Optionally, the EAS discovery request message may alternatively include indication information, and the indication information indicates the T-EES to perform an EAS discovery procedure by using latest location information of the UE. The indication information may further indicate the T-EES to obtain location information of all UEs in the UE list from a core network, the ECS, or in another manner.

Optionally, the EAS discovery request message may further include information about the group identifier of the UE group and the quantity of UEs included in the UE group.

Optionally, the EAS discovery request message may further include information about the S-EES and information about the S-EAS.

Optionally, the EAS discovery request message may further include information about an expected service range of the UE, where the expected service range is an expected application service range determined based on the location information of the UE.

Specifically, the expected service range may be a level of an EES or EAS service range (for example, a district-level or city-level EES), or may be a specific geographical service range (for example, the service range is an EAS in Beijing).

The EAS discovery request message may further include indication information, and the indication information indicates to discover an EAS for the plurality of UEs. The indication information may be an explicit indication or may be an implicit indication.

For example, the indication information is an explicit indication, to be specific, the indication information directly indicates that the EAS that needs to be discovered is used to provide an application service for the plurality of UEs.

For example, the indication information is an implicit indication, and the implicit indication may be the UE list or the group identifier of the UE group. After obtaining the UE list or the group identifier of the UE group, the T-EES may determine that an EAS that needs to be discovered is used to provide an application service for the plurality of UEs.

S1502: The T-EES determines a T-EAS.

An execution process of S1502 is similar to that of S1302. For details, refer to S1302. For brevity, details are not described herein again.

S1503: The T-EES sends an EAS discovery response message to the S-EES.

The EAS discovery response message includes information such as an identifier of one or more T-EASs and an address of the one or more T-EASs.

S1504: The S-EES sends the EAS discovery response message to the S-EAS.

The EAS discovery response message includes information such as an identifier of one or more T-EASs and an address of the one or more T-EASs.

Optionally, after receiving the EAS discovery response message and before performing ACR for the plurality of UEs, the S-EAS may further determine whether ACR needs to be performed for the plurality of UEs. A specific determining process is similar to the related description in S1202. For details, refer to S1202. Details are not described herein again.

S1505: The S-EAS sends a selected T-EAS declaration message to the S-EES.

The selected T-EAS declaration (selected T-EAS declaration request) message includes information about the selected T-EAS, the UE list, or the group identifier of the UE group.

Optionally, the selected T-EAS declaration message further includes indication information, and the indication information indicates the S-EES to trigger execution of ACR for another UE in the UE list or the UE group.

S1506: The S-EES sends a selected T-EAS declaration response message to the S-EAS.

The selected T-EAS declaration response (selected T-EAS declaration response) message indicates whether the S-EAS can trigger execution of ACR for the another UE in the UE list or the UE group.

S1507: The S-EES or the S-EAS triggers ACR for the another UE.

Alternatively, when the EAS discovery request message sent by the S-EES in S1501 includes the information about the S-EES and the information about the S-EAS, ACR is triggered for the another UE in S1507, and the triggering may alternatively be performed by the T-EES or the T-EAS.

S1508: The S-EES or the T-EES sends a target information notification message to another UE in the UE list.

The target information notification may include the information about the T-EES and information about the T-EAS. After obtaining the information about the T-EES and the information about the T-EAS, the another UE in the UE list may directly request the T-EES and the T-EAS to perform ACR, without procedures of detecting an event that triggers ACR and determining whether ACR needs to be performed.

Alternatively, when the EEC subscribes to a notification message related to ACR information from the EES, the S-EES or the T-EES sends ACR complete notification information to the EEC after application context relocation is completed.

S1509: The S-EES or the S-EAS performs ACR for all the UEs in the UE list.

Alternatively, when the EAS discovery request message sent by the S-EES in S1501 includes the information about the S-EES and the information about the S-EAS, the ACR process performed by the UE in S1509 may alternatively be completed by the T-EES or the T-EAS.

In this embodiment of this application, after obtaining information about a plurality of EASs from the T-EES, the S-EES sends the information to the S-EAS. The S-EAS selects the T-EAS and sends the information about the selected T-EAS to the S-EES. Then, the S-EES sends the information about the T-EAS to the UE in the UE group, and indicates the S-EAS to perform ACR for the UE in the UE group. In this embodiment of this application, efficiency of performing ACR for the plurality of UEs can be improved, and communication signaling overheads of the UE in the process of performing ACR can be reduced.

Based on a same inventive concept as the foregoing method embodiments, an embodiment of this application further provides a communication apparatus. The communication apparatus may have functions of the configuration server, the enabler server, the terminal device, or the first entity in the foregoing method embodiments, and may be configured to perform the steps performed by the function of the configuration server, the enabler server, the terminal device, or the first entity in the foregoing method embodiments. The function may be implemented by hardware, or may be implemented by software or by hardware executing corresponding software. The hardware or the software includes one or more modules corresponding to the foregoing functions.

In a possible implementation, a communication apparatus 1700 shown in FIG. 17 may be used as the configuration server in the foregoing method embodiments, and performs the steps performed by the configuration server in the foregoing method embodiments.

As shown in FIG. 17, the communication apparatus 1700 may include a transceiver unit 1710 and a processing unit 1720. The transceiver unit 1710 and the processing unit 1720 are coupled to each other.

The transceiver unit 1710 may be configured to support the communication apparatus 1700 in performing communication, for example, performing sending and/or receiving actions performed by the configuration server, such as S201, S203, S401, S403, S501, S503, S601, S603, S701, S703, S801, S803, S804, S901, and S903 in FIG. 3, FIG. 5, FIG. 6, FIG. 7, FIG. 8, FIG. 9, and FIG. 10.

The processing unit 1720 may be configured to support the communication apparatus 1700 in performing the processing actions in the foregoing method embodiments, for example, performing processing actions such as S202, S302, S402, S502, S602, S702, S802, and S902 performed by the configuration server in FIG. 3, FIG. 4, FIG. 5, FIG. 6, FIG. 7, FIG. 8, FIG. 9, and FIG. 10.

In another possible implementation, a communication apparatus 1700 shown in FIG. 17 may be used as the enabler server in the foregoing method embodiments, and performs the steps performed by the enabler server in the foregoing method embodiments.

As shown in FIG. 17, the communication apparatus 1700 may include a transceiver unit 1710 and a processing unit 1720. The transceiver unit 1710 and the processing unit 1720 are coupled to each other.

The transceiver unit 1710 may be configured to support the communication apparatus 1700 in performing communication, for example, performing sending and/or receiving actions performed by the enabler server, such as S101, S103, S301, S303, S304, S305, S401, S403, S504, S604, S704, S805, and S904 in FIG. 2, FIG. 4, FIG. 5, FIG. 6, FIG. 7, FIG. 8, FIG. 9, and FIG. 10.

The processing unit 1720 may be configured to support the communication apparatus 1700 in performing the processing actions in the foregoing method embodiments, for example, performing processing actions such as S102, S302, S505, S605, S705, S807, and S905 performed by the enabler server in FIG. 2, FIG. 4, FIG. 6, FIG. 7, FIG. 8, FIG. 9, and FIG. 10.

In still another possible implementation, a communication apparatus 1700 shown in FIG. 17 may be used as the terminal device in the foregoing method embodiments, and performs the steps performed by the terminal device in the foregoing method embodiments.

As shown in FIG. 17, the communication apparatus 1700 may include a transceiver unit 1710 and a processing unit 1720. The transceiver unit 1710 and the processing unit 1720 are coupled to each other.

The transceiver unit 1710 may be configured to support the communication apparatus 1700 in performing communication, for example, performing sending and/or receiving actions performed by the terminal device, such as S101, S201, S501, S701, S801, and S901 in FIG. 2, FIG. 3, FIG. 6, FIG. 8, FIG. 9, and FIG. 10.

The processing unit 1720 may be configured to support the communication apparatus 1700 in performing processing actions in the foregoing method embodiments, for example, performing processing actions performed by the terminal device, such as selecting the enabler server or the application server, in FIG. 6, FIG. 8, FIG. 9, and FIG. 10.

In still another possible implementation, a communication apparatus 1700 shown in FIG. 17 may be used as the first entity in the foregoing method embodiments, and performs the steps performed by the first entity in the foregoing method embodiments.

As shown in FIG. 17, the communication apparatus 1700 may include a transceiver unit 1710 and a processing unit 1720. The transceiver unit 1710 and the processing unit 1720 are coupled to each other.

The transceiver unit 1710 may be configured to support the communication apparatus 1700 in performing communication, for example, performing sending and/or receiving actions performed by the first entity, such as S601, S604, S1002, S1102, S1203, S1304, S1401, S1501, S1504, and S1506 in FIG. 7, FIG. 11, FIG. 12, FIG. 13, FIG. 14, and FIG. 15.

The processing unit 1720 may be configured to support the communication apparatus 1700 in performing the processing actions in the foregoing method embodiments, for example, performing processing actions performed by the first entity, such as S1001, S1101, S1307, S1405, and S1507 in FIG. 11, FIG. 12, FIG. 14, and FIG. 15.

In still another possible implementation, a communication apparatus 1700 shown in FIG. 17 may be used as the application server in the foregoing method embodiments, and performs the steps performed by the application server in the foregoing method embodiments.

As shown in FIG. 17, the communication apparatus 1700 may include a transceiver unit 1710 and a processing unit 1720. The transceiver unit 1710 and the processing unit 1720 are coupled to each other.

The transceiver unit 1710 may be configured to support the communication apparatus 1700 in performing communication, for example, performing sending and/or receiving actions performed by the application server, such as S301, S305, S706, S1202, S1305, and S1506 in FIG. 4, FIG. 8, FIG. 13, FIG. 14, and FIG. 16.

The processing unit 1720 may be configured to support the communication apparatus 1700 in performing the processing actions in the foregoing method embodiments, for example, performing processing actions such as S1201, S1307, S1405, and S1507 performed by the application server in FIG. 13, FIG. 14, FIG. 15, and FIG. 16.

Optional, the communication apparatus 1700 may further include a storage unit 1730, configured to store program code and data of the communication apparatus 1700.

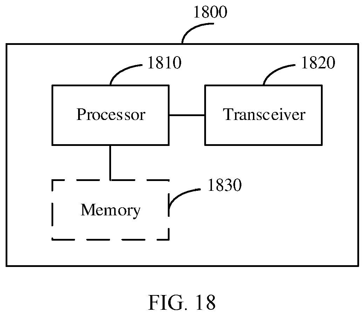

FIG. 18 is a schematic block diagram of a communication device 1800 according to an embodiment of this application. As shown in the figure, the communication device 1800 includes at least one processor 1810 and a transceiver 1820. The processor 1810 is coupled to a memory, and is configured to execute instructions stored in the memory, to control the transceiver 1820 to send a signal and/or receive a signal.

Optionally, the communication device 1800 further includes a memory 1830, configured to store instructions.

In some embodiments, the processor 1810 and the memory 1830 may be combined into a processing apparatus, and the processor 1810 is configured to execute program code stored in the memory 1830 to implement the foregoing functions. During specific implementation, the memory 1830 may alternatively be integrated in the processor 1810, or may be independent of the processor 1810.

In some embodiments, the transceiver 1820 may include a receiver (or referred to as a receive machine) and a transmitter (or referred to as a transmit machine).

The transceiver 1820 may further include an antenna. There may be one or more antennas. The transceiver 1820 may alternatively be a communication interface or an interface circuit.

When the communication device 1800 is a chip, the chip includes a transceiver unit and a processing unit. The transceiver unit may be an input/output circuit or a communication interface. The processing unit may be a processor, a microprocessor, or an integrated circuit integrated on the chip.

In an implementation process, the steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the method performed by the communication device in the foregoing method embodiments.

For example, when the computer program is executed by a computer, the computer can implement the method performed by the communication device in the foregoing method embodiment.

An embodiment of this application further provides a computer program product. The computer program product includes computer program code used to implement the method performed by the communication device in the foregoing method embodiments. When the computer program code runs on a computer, the foregoing application server discovery method is performed.

An embodiment of this application further provides a chip, including a processor, configured to read instructions stored in a memory. When the processor executes the instructions, the chip is enabled to implement the application server discovery method in the foregoing method embodiments.

For explanations and beneficial effects of related content in any one of the foregoing provided apparatuses, refer to the corresponding method embodiments provided above. Details are not described herein again.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing description is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An application server discovery method, comprising:
receiving, by a configuration server, a first request message, wherein the first request message is used to request to discover an enabler server, and the enabler server is configured to serve a plurality of terminal devices;
determining, by the configuration server, the enabler server based on information about a terminal device group, wherein the terminal device group comprises the plurality of terminal devices; and
sending, by the configuration server, a first response message, wherein the first response message comprises information about the enabler server.

2. The method according to claim 1, wherein the first request message comprises first discovery information and/or second discovery information, the first discovery information indicates to discover the enabler server for the plurality of terminal devices, and the second discovery information is used to describe a service range expected by the plurality of terminal devices; and the method further comprises:
determining, by the configuration server, the enabler server based on the first discovery information and/or the second discovery information.

3. The method according to claim 1 or 2, wherein the first response message further comprises first reporting indication information, and the first reporting indication information indicates to send the information about the enabler server to the configuration server.

4. The method according to claim 3, wherein the first response message further comprises second reporting indication information, the second reporting indication information indicates to send information about an application server to the enabler server, and the application server is configured to provide an application service for the plurality of terminal devices.

5. The method according to any one of claims 1 to 4, wherein the method further comprises:
sending, by the configuration server, selection indication information to the enabler server, wherein the selection indication information indicates the enabler server to select a same application server for the plurality of terminal devices.

6. An application server discovery method, comprising:
receiving, by an enabler server, a second request message, wherein the second request message is used to request to discover an application server, and the application server is configured to provide an application service for a plurality of terminal devices;
determining, by the enabler server, the application server based on information about a terminal device group, wherein the terminal device group comprises the plurality of terminal devices; and
sending, by the enabler server, a second response message, wherein the second response message comprises information about the application server.

7. The method according to claim 1 or 6, wherein the information about the terminal device group comprises a terminal device list and/or a group identifier, the terminal device list comprises device identifiers of the plurality of terminal devices, and the group identifier identifies the terminal device group.

8. The method according to claim 7, wherein the information about the terminal device group further comprises location information and/or a service identifier, wherein the location information is location information of the plurality of terminal devices, and the service identifier identifies a service that needs to be obtained by the plurality of terminal devices.

9. The method according to any one of claims 6 to 8, wherein the second request message further comprises third discovery information and/or fourth discovery information, the third discovery information indicates to discover the application server for the plurality of terminal devices, and the fourth discovery information is used to describe an application service range expected by the plurality of terminal devices; and the method further comprises:
determining, by the enabler server, the application server based on the third discovery information and/or the fourth discovery information.

10. The method according to any one of claims 6 to 9, wherein the second response message further comprises second reporting indication information, and the second reporting indication information indicates to send the information about the application server to the enabler server.

11. An application server discovery method, comprising:
receiving, by a configuration server, a third request message, wherein the third request message is used to request to discover a target enabler server, and the target enabler server is configured to serve a plurality of terminal devices after application context relocation;
determining, by the configuration server based on information about a terminal device group, whether to perform application context relocation for the plurality of terminal devices, wherein the terminal device group comprises the plurality of terminal devices; and
sending, by the configuration server, a third response message, wherein the third response message indicates whether to perform application context relocation for the plurality of terminal devices.

12. The method according to claim 11, wherein the information about the terminal device group comprises a terminal device list and/or a group identifier, the terminal device list comprises device identifiers of the plurality of terminal devices, and the group identifier identifies the terminal device group.

13. The method according to claim 12, wherein the information about the terminal device group further comprises location information, and the location information is location information of the plurality of terminal devices.

14. The method according to any one of claims 11 to 13, wherein
when the configuration server determines to perform application context relocation for the plurality of terminal devices, the third response message comprises information about the target enabler server, the third response message further comprises the terminal device list and/or the group identifier, the terminal device list comprises the device identifiers of the plurality of terminal devices, and the group identifier identifies the terminal device group comprising the plurality of terminal devices.

15. An application server discovery method, comprising:
receiving, by an enabler server, a fourth request message, wherein the fourth request message comprises a terminal device list and/or a group identifier, the terminal device list comprises device identifiers of a plurality of terminal devices, the group identifier identifies a terminal device group comprising the plurality of terminal devices, and the fourth request message is used to request to perform application context relocation for the plurality of terminal devices; and
performing, by the enabler server, application context relocation for the plurality of terminal devices.

16. The method according to claim 15, wherein the method further comprises:
sending, by the enabler server, a first notification message to an application server, wherein the first notification message comprises the terminal device list, and the first notification message notifies the application server to perform application context relocation for the plurality of terminal devices.

17. The method according to claim 15 or 16, wherein the method further comprises:
sending, by the enabler server, a second notification message to the plurality of terminal devices, wherein the second notification message comprises information about a target enabler server and/or information about a target application server, the target enabler server is configured to serve the plurality of terminal devices after application context relocation, and the target application server is configured to provide an application service for the plurality of terminal devices after application context relocation.

18. An application server discovery method, comprising:
sending, by a first terminal device, a first request message, wherein the first request message is used to request to discover an enabler server, and the enabler server is configured to serve a plurality of terminal devices;
receiving, by a configuration server, the first request message;
determining, by the configuration server, the enabler server based on information about a terminal device group, wherein the terminal device group comprises the plurality of terminal devices;
sending, by the configuration server, a first response message, wherein the first response message comprises information about the enabler server; and
receiving, by the first terminal device, the first response message.

19. The method according to claim 18, wherein the method further comprises:
sending, by the first terminal device, a second request message, wherein the second request message is used to request to discover an application server, and the application server is configured to provide an application service for the plurality of terminal devices;
receiving, by the enabler server, the second request message;
determining, by the enabler server, the application server based on the information about the terminal device group, wherein the terminal device group comprises the plurality of terminal devices;
sending, by the enabler server, a second response message, wherein the second response message comprises information about the application server; and
receiving, by the first terminal device, the second response message.

20. An application server discovery method, comprising:
sending, by a first entity, a third request message, wherein the third request message is used to request to discover a target enabler server, and the target enabler server is configured to serve a plurality of terminal devices after application context relocation;
receiving, by a configuration server, the third request message;
determining, by the configuration server based on information about a terminal device group, whether to perform application context relocation for the plurality of terminal devices, wherein the terminal device group comprises the plurality of terminal devices;
sending, by the configuration server, a third response message, wherein the third response message indicates whether to perform application context relocation for the plurality of terminal devices; and
receiving, by the first entity, the third response message.

21. The method according to claim 20, wherein the method further comprises:
sending, by the first entity, a fourth request message, wherein the fourth request message comprises a terminal device list and/or a group identifier, the terminal device list comprises device identifiers of the plurality of terminal devices, the group identifier identifies the terminal device group comprising the plurality of terminal devices, and the fourth request message is used to request to perform application context relocation for the plurality of terminal devices;
receiving, by an enabler server, the fourth request message; and
performing, by the enabler server, application context relocation for the plurality of terminal devices.

22. An application server selection apparatus, comprising a unit for implementing the method according to any one of claims 1 to 5, claims 6 to 10, claims 11 to 14, or claims 15 to 17.

23. An application server discovery apparatus, comprising:
a processor, configured to execute computer instructions stored in a memory, to enable the apparatus to perform the method according to any one of claims 1 to 5 or claims 11 to 14.

24. An application server discovery apparatus, comprising:
a processor, configured to execute computer instructions stored in a memory, to enable the apparatus to perform the method according to any one of claims 6 to 10 or claims 15 to 17.

25. A computer-readable storage medium, wherein the computer-readable storage medium stores a computer program; and when the computer program is executed by a computer, the method according to any one of claims 1 to 5, claims 6 to 10, claims 11 to 14, or claims 15 to 17 is implemented.

26. A computer program product, wherein the computer program product comprises computer program code; and when the computer program code runs on a computer, the method according to any one of claims 1 to 5, claims 6 to 10, claims 11 to 14, or claims 15 to 17 is performed.

27. A chip, comprising a processor, configured to read instructions stored in a memory, wherein when the processor executes the instructions, the chip is enabled to implement the method according to any one of claims 1 to 5, claims 6 to 10, claims 11 to 14, or claims 15 to 17.
